# EUROPÄISCHE PATENTSCHRIFT

(11) **EP 3 916 499 B1**
(45) Veröffentlichungstag und Bekanntmachung des Hinweises auf die Patenterteilung: **06.03.2024**
(21) Anmeldenummer: 21172489.3
(22) Anmeldetag: 06.05.2021
(51) Int. Cl.: G05B 19/401, B23Q 17/24, G01B 11/24, G05B 19/4065

(54) **OPTISCHES MESS- UND/ODER EINSTELLVERFAHREN UND OPTISCHES WERKZEUGEINSTELL- UND/ODER WERKZEUGMESSGERÄT**
OPTICAL MEASURING AND / OR ADJUSTING METHOD AND OPTICAL TOOL ADJUSTING AND / OR TOOL MEASURING APPARATUS
PROCÉDÉ DE MESURE ET/OU DE RÉGLAGE OPTIQUE ET APPAREIL OPTIQUE DE RÉGLAGE D'OUTIL ET/OU DE MESURE D'OUTIL

(30) Priorität: 27.05.2020 DE 102020114158
(43) Veröffentlichungstag der Anmeldung: 01.12.2021
(73) Patentinhaber: E. Zoller GmbH & Co. KG Einstell- und Messgeräte, 74385 Pleidelsheim (DE)
(72) Erfinder: Zoller, Alexander, 74385 Pleidelsheim (DE)
(74) Vertreter: Daub, Thomas

(56) Entgegenhaltungen:
- WO-A1-2019/066058
- DE-A1-102018 127 178
- US-A1- 2018 143 611

## Beschreibung

### Stand der Technik

Die Erfindung betrifft ein optisches Mess- und Einstellverfahren nach dem Anspruch 1 sowie ein optisches Werkzeugeinstell- und Werkzeugmessgerät nach dem Anspruch 22.

In der Steinbearbeitungsindustrie werden bei der Herstellung von Kantenprofilen, z.B. von Küchen- oder Waschtischsteinplatten auch heutzutage noch manuelle und damit fehleranfällige und zeitaufwändige Einstellungen der Bearbeitungswerkzeuge vorgenommen. Aus den Dokumenten WO 2019/066058 A1, US 2018/143611 A1 und DE 10 2018 127 178 A1 sind optische Werkzeugvermessungs- und Werkzeugeinstellverfahren für von Profilierrädern und/oder Profilpolierrädern verschiedene Werkzeuge bekannt.

Die Aufgabe der Erfindung besteht insbesondere darin, ein gattungsgemäßes Verfahren mit vorteilhaften Eigenschaften hinsichtlich einer Präzision und/oder hinsichtlich einer Geschwindigkeit einer Kantenbearbeitung von Steinplatten bereitzustellen. Die Aufgabe wird erfindungsgemäß durch die Merkmale der Patentansprüche 1 und 21 gelöst, während vorteilhafte Ausgestaltungen und Weiterbildungen der Erfindung den Unteransprüchen entnommen werden können.

### Vorteile der Erfindung

Es wird ein optisches Mess- und Einstellverfahren zu einem kombinierten Vermessen und Einstellen eines eine Mehrzahl an Profilierrädern und/oder Profilpolierrädern aufweisenden Satzes von Profilbearbeitungswerkzeugen vorgeschlagen, wobei die einzelnen Profilbearbeitungswerkzeuge des Satzes von Profilbearbeitungswerkzeugen zu einer sukzessiven Bearbeitung von Seitenkanten von Steinplatten vorgesehen sind, mit zumindest einem Werkzeugeinstell- und Werkzeugmessgerät, mittels dessen in zumindest einem ersten Werkzeugmessschritt eine zumindest teilweise und/oder zumindest abschnittsweise konkav gekrümmte Arbeitskontur, insbesondere Fräskontur oder Polierkontur, eines ersten Profilbearbeitungswerkzeugs des Satzes von Profilbearbeitungswerkzeugen zumindest teilautomatisiert, vorzugsweise vollautomatisiert, optisch erfasst wird, wobei der in dem ersten Werkzeugmessschritt erfassten Arbeitskontur des ersten Profilbearbeitungswerkzeugs in einem ersten Werkzeugeinstellschritt Profilkoordinaten zugeordnet werden, welche insbesondere durch eine, zumindest einen Prozessor umfassende, Recheneinheit des Werkzeugeinstell- und Werkzeugmessgeräts berechnet werden, und welche in einer Speichereinheit des Werkzeugeinstell- und Werkzeugmessgeräts abgespeichert werden.

Dadurch kann vorteilhaft eine hohe Präzision, insbesondere eines an den Werkzeugmessschritt und den Werkzeugeinstellschritt anschließenden Steinplatten-Bearbeitungsschritts, erreicht werden. Vorteilhaft kann dadurch ermöglicht werden, dass eine Steinplatte mit einer besonders hohen Präzision bearbeitet werden kann. Zudem kann vorteilhaft der gesamte Steinplattenbearbeitungsprozess beschleunigt werden, beispielsweise indem eine Vermessung der Profilbearbeitungswerkzeuge, insbesondere des jeweils folgenden Profilbearbeitungswerkzeugs, erfolgen kann, während die Steinplatte bereits bearbeitet wird. Vorteilhaft können Stillstandzeiten von Werkzeugmaschinen reduziert werden. Außerdem kann vorteilhaft durch eine hohe Einstellpräzision von Profilbearbeitungswerkzeugen eine Lebensdauer der Profilbearbeitungswerkzeuge maximiert werden. Vorteilhaft können Kosten, insbesondere Stückzahlkosten, gesenkt werden.

Unter einem "kombinierten Vermessen und Einstellen" soll in diesem Zusammenhang insbesondere ein Vermessen und Einstellen verstanden werden, bei welchem zumindest die für unterschiedliche Profilbearbeitungswerkzeuge ermittelten Einstellwerte aufeinander abgestimmt werden. Insbesondere wird dabei ein ermittelter Messwert und ein ermittelter Einstellwert eines zuerst vermessenen Profilbearbeitungswerkzeugs als Basis für eine Messung und für eine Bestimmung des Einstellwerts eines anschließend vermessenen Profilbearbeitungswerkzeugs verwendet. Der Satz von Profilbearbeitungswerkzeugen umfasst insbesondere zumindest zwei, vorzugsweise zumindest drei, vorteilhaft zumindest fünf, bevorzugt zumindest sieben und besonders bevorzugt höchstens zehn Profilbearbeitungswerkzeuge. Vorzugsweise ist ein erster Teil der Profilbearbeitungswerkzeuge des Satzes von Profilbearbeitungswerkzeugen als Profilfräswerkzeug, insbesondere als Profilierrad, ausgebildet, während ein weiterer Teil der Profilbearbeitungswerkzeuge des Satzes von Profilbearbeitungswerkzeugen als Profilpolierwerkzeug, insbesondere als Profilpolierrad, ausgebildet ist. Insbesondere weist das Profilbearbeitungswerkzeug, vorzugsweise das Profilierrad und/oder das Profilpolierrad, eine Bearbeitungsoberfläche, vorzugsweise eine Fräsfläche oder eine Polierfläche auf, welche sich um einen, insbesondere rund um eine Werkzeugrotationsachse des Profilbearbeitungswerkzeugs verlaufenden, Umfang des Profilbearbeitungswerkzeugs erstreckt. Insbesondere bildet die Bearbeitungsoberfläche, vorzugsweise die Fräsfläche oder die Polierfläche, eine Form, insbesondere die Arbeitskontur, aus, welche zumindest im Wesentlichen der gewünschten Kantenform der bearbeiteten Steinplatte entspricht. Die Steinplatte ist insbesondere als eine Küchensteinplatte oder als eine Waschtischsteinplatte oder dergleichen ausgebildet. Unter einer "sukzessiven Bearbeitung einer Seitenkante" soll insbesondere eine einzeln aufeinanderfolgende Bearbeitung derselben Seitenkante durch verschiedene Profilbearbeitungswerkzeuge verstanden werden.

Unter einem "Werkzeugeinsteit- und Werkzeugmessgerät" soll insbesondere ein Gerät verstanden werden, welches zumindest dazu vorgesehen ist, zumindest eine Länge, zumindest einen Winkel, zumindest eine Kontur und/oder zumindest eine Außenform eines Werkzeugs, insbesondere relativ zu einer Werkzeugaufnahme, zumindest teilweise zu erfassen und einzustellen. Unter einer "teilweise konkav gekrümmten" Kontur soll insbesondere eine Kontur verstanden werden, welche zumindest in einem Teilbereich der Kontur konkav gekrümmt, insbesondere nach innen gekrümmt, ist. Unter einer "abschnittsweise konkav gekrümmten" Kontur soll insbesondere eine Kontur verstanden werden, welche zumindest in einem Teilabschnitt der Kontur konkav gekrümmt, insbesondere nach innen gekrümmt, ist. Eine (Teil-) Oberfläche eines Körpers oder eine (Teil-) Kontur einer Außenkontur eines Körpers ist insbesondere konkav gekrümmt, wenn eine gedachte gerade Linie zwischen beliebig wählbaren Punkten dieser Oberfläche oder dieser Außenkontur komplett außerhalb des Körpers verläuft. Insbesondere kann auch eine lediglich um insgesamt 90° oder weniger gekrümmte Kontur eine konkav gekrümmte Arbeitskontur ausbilden. Unter einer "Arbeitskontur" soll insbesondere eine Kontur einer Arbeitsfläche bzw. einer Bearbeitungsoberfläche eines Profilbearbeitungswerkzeugs, welche zu einer Manipulation der Kantenform der Steinplatte vorgesehen ist, verstanden werden. Darunter, dass ein Vorgang "vollautomatisiert" ist soll insbesondere verstanden werden, dass der Vorgang frei von jeglicher Beeinflussung eines Bedieners, insbesondere abgesehen von einem Starten und/oder einem Stoppen des Vorgangs, ist. Die Speichereinheit ist insbesondere als ein flüchtiges oder nichtflüchtiges Datenspeichermedium des Werkzeugeinstell- und Werkzeugmessgeräts ausgebildet.

Erfindungsgemäß wird in zumindest einem zweiten Werkzeugmessschritt, welcher vorzugsweise zeitlich nach dem ersten Werkzeugbearbeitungsschritt vorgenommen wird, eine zumindest teilweise und/oder zumindest abschnittsweise konkave Arbeitskontur, insbesondere Fräskontur oder Polierkontur, eines zweiten Profilbearbeitungswerkzeugs des Satzes von Profilbearbeitungswerkzeugen zumindest teilautomatisiert, vorzugsweise vollautomatisiert, optisch erfasst, wobei die in dem zweiten Werkzeugmessschritt ermittelten Profilkoordinaten des zweiten Profilbearbeitungswerkzeugs in zumindest einem zweiten Werkzeugeinstellschritt auf die zuvor in dem ersten Werkzeugmessschritt ermittelten Profilkoordinaten des ersten Profilbearbeitungswerkzeugs abgestimmt werden. Dadurch kann vorteilhaft ein sukzessives Bearbeiten der Steinplatte ermöglicht werden, wodurch insbesondere eine besonders hohe Präzision der Steinplattenbearbeitung erreicht werden kann. Darunter, dass "Profilkoordinaten aufeinander abgestimmt werden" soll insbesondere verstanden werden, dass Profilkoordinaten eines später vermessenen Profilbearbeitungswerkzeugs auf Profilkoordinaten des zuvor vermessenen Profilbearbeitungswerkzeugs referenziert werden. Darunter, dass Profilkoordinaten aufeinander abgestimmt werden soll insbesondere zudem verstanden werden, dass die Profilkoordinaten des später vermessenen Profilbearbeitungswerkzeugs an den Profilkoordinaten des zuvor vermessenen Profilbearbeitungswerkzeugs ausgerichtet werden. Erfindungsgemäß sind die Profildaten dazu vorgesehen, an eine Werkzeugmaschine ausgegeben zu werden, welche basierend auf den Profildaten die Steinplatte mit dem Profilbearbeitungswerkzeug bearbeitet, insbesondere das Profilbearbeitungswerkzeug relativ zu der zu bearbeitenden Steinplatte positioniert.

Wenn erfindungsgemäß in dem zweiten Werkzeugeinstellschritt die Profilkoordinaten der Arbeitskontur des ersten Profilbearbeitungswerkzeugs, insbesondere in einem Messkoordinatensystem des Werkzeugeinstell- und Werkzeugmessgeräts und/oder in einem Bearbeitungskoordinatensystem der Werkzeugmaschine, als Referenzkoordinaten für eine relative Positionierung von Profilkoordinaten der erfassten Arbeitskontur des zweiten Profilbearbeitungswerkzeugs eingegeben werden und in der Speichereinheit des Werkzeugeinstell- und Werkzeugmessgeräts abgespeichert werden und/oder an die Werkzeugmaschine übertragen werden, kann vorteilhaft eine besonders hohe Präzision der Steinplattenbearbeitung erreicht werden. Zudem kann vorteilhaft eine hohe Lebensdauer der Profilbearbeitungswerkzeuge erreicht werden.

Zudem wird vorgeschlagen, dass das optische Mess- und Einstellverfahren zumindest eine Mehrzahl, insbesondere zumindest fünf, weitere Werkzeugmessschritte umfasst, in welchen zumindest teilweise konkave und/oder zumindest abschnittsweise Arbeitskonturen, insbesondere Fräskonturen oder Polierkonturen, einer Mehrzahl von weiteren, insbesondere zumindest fünf weiteren, Profilbearbeitungswerkzeugen des Satzes von Profilbearbeitungswerkzeugen zumindest teilautomatisiert, vorzugsweise vollautomatisiert, optisch erfasst werden, wobei in jedem der weiteren Werkzeugmessschritte die darin ermittelten Profilkoordinaten der weiteren Profilbearbeitungswerkzeuge jeweils in zumindest einem zugehörigen weiteren Werkzeugeinstellschritt auf die in dem vorangehenden Werkzeugmessschritt ermittelten Profilkoordinaten eines der zuvor vermessenen weiteren Profilbearbeitungswerkzeuge abgestimmt werden. Dadurch kann vorteilhaft eine besonders hohe Präzision der Werkzeugvermessung, der Werkzeugeinstellung und/oder der Steinplattenbearbeitung erreicht werden.

Außerdem wird vorgeschlagen, dass bei dem kombinierten Vermessen und Einstellen der Mehrzahl an einzelnen Profilbearbeitungswerkzeugen des Satzes von Profilbearbeitungswerkzeugen in zumindest einem Werkzeugmessschritt ein Profilfräswerkzeug, insbesondere ein Profilierrad, und in zumindest einem, insbesondere direkt, auf diesen Werkzeugmessschritt folgenden Werkzeugmessschritt ein Profilpolierwerkzeug, insbesondere ein Profilpolierrad, optisch vermessen wird. Dadurch kann insbesondere eine vorteilhafte Abstimmung der durch die unterschiedlichen Profilbearbeitungswerkzeuge (Profilfräswerkzeuge und Profilpolierwerkzeuge) vorgenommenen Bearbeitungsschritte erreicht werden. Vorteilhaft kann dadurch eine besonders effiziente, effektive und präzise Steinplattenbearbeitung ermöglicht werden.

Weiterhin wird vorgeschlagen, dass in einem auf den Werkzeugmessschritt, in dem das Profilpolierwerkzeug vermessen wurde, folgenden und zu dem in dem Werkzeugmessschritt vermessenen Profilpolierwerkzeug zugehörigen Werkzeugeinstellschritt die ermittelten Profilkoordinaten des Profilpolierwerkzeugs auf die zuvor in dem ersten Werkzeugmessschritt ermittelten Profilkoordinaten des ersten Profilbearbeitungswerkzeugs, welches als Profilfräswerkzeug ausgebildet ist, abgestimmt werden. Dadurch kann insbesondere eine vorteilhafte Abstimmung der durch die unterschiedlichen Profilbearbeitungswerkzeuge (Profilfräswerkzeuge und Profilpolierwerkzeuge) vorgenommenen Bearbeitungsschritte erreicht werden. Vorteilhaft kann dadurch eine besonders effiziente, effektive und präzise Steinplattenbearbeitung ermöglicht werden. Alternativ ist auch denkbar, dass die ermittelten Profilkoordinaten des Profilpolierwerkzeugs auf die in dem, insbesondere direkt, vorangehenden, an dem Profilfräswerkzeug vorgenommenen Werkzeugmessschritt ermittelten Profilkoordinaten des Profilfräswerkzeugs abgestimmt werden.

Zusätzlich wird vorgeschlagen, dass in dem ersten an einem Profilfräswerkzeug vorgenommenen Werkzeugmessschritt des kombinierten Vermessens und Einstellens der Mehrzahl an einzelnen Profilbearbeitungswerkzeugen des Satzes von Profilbearbeitungswerkzeugen das Profilfräswerkzeug des Satzes von Profilbearbeitungswerkzeugen mit der am wenigsten groben Bearbeitungsoberfläche, insbesondere das Profilfräswerkzeug des Satzes von Profilbearbeitungswerkzeugen mit der feinsten Körnung, vorzugsweise der feinsten Diamantkörnung, vermessen wird, und dass die in den darauf folgenden Werkzeugmessschritten zu vermessenden Profilfräswerkzeuge aufsteigend nach einer Grobheit der Bearbeitungsoberfläche der Profilfräswerkzeuge, insbesondere aufsteigend mit ansteigender Körnung, vorzugsweise mit ansteigender Diamantkörnung, sortiert werden. Dadurch kann vorteilhaft eine logische Messreihenfolge erreicht werden, welche insbesondere einen Nominalabtrag eines im Bearbeitungszyklus nachfolgenden Profilfräswerkzeugs berücksichtigt. Vorteilhaft kann dadurch eine besonders hohe Genauigkeit der Steinplatten-Kantenbearbeitung erreicht werden.

Wenn zudem zuerst zumindest eines der Profilfräswerkzeuge des Satzes von Profilbearbeitungswerkzeugen, insbesondere das Profilfräswerkzeug des Satzes von Profilbearbeitungswerkzeugen mit der die feinste Körnung, insbesondere die feinste Diamantkörnung, aufweisenden Bearbeitungsoberfläche, vermessen und eingestellt werden, bevor ein oder mehrere Profilpolierwerkzeuge des Satzes von Profilbearbeitungswerkzeugen vermessen und eingestellt werden, kann vorteilhaft ein Nominalabtrag der im Bearbeitungszyklus vor den Profilpolierwerkzeugen eingesetzten Profilfräswerkzeuge bei der Einstellung der Profilpolierwerkzeuge mit in Betracht gezogen werden. Dadurch kann vorteilhaft eine besonders hohe Genauigkeit der Steinplatten-Kantenbearbeitung erreicht werden. Vorzugsweise werden zuerst alle Profilfräswerkzeuge des Satzes von Profilbearbeitungswerkzeugen vermessen und eingestellt, bevor ein oder mehrere Profilpolierwerkzeuge des Satzes von Profilbearbeitungswerkzeugen vermessen und eingestellt werden.

Ferner wird vorgeschlagen, dass die in Werkzeugmessschritten an Profilpolierwerkzeugen des Satzes von Profilbearbeitungswerkzeugen ermittelten Profilkoordinaten jeweils auf die ermittelten Profilkoordinaten des Profilfräswerkzeugs des Satzes von Profilbearbeitungswerkzeugen mit der feinsten Bearbeitungsoberfläche, insbesondere mit der die feinste Körnung, insbesondere die feinste Diamantkörnung, aufweisenden Bearbeitungsoberfläche, insbesondere an die zuerst ermittelten Profilkoordinaten des Profilfräswerkzeugs des Satzes von Profilbearbeitungswerkzeugen, abgestimmt werden. Dadurch kann vorteilhaft ein Nominalabtrag der im Bearbeitungszyklus vor den Profilpolierwerkzeugen eingesetzten Profilfräswerkzeuge bei der Einstellung der Profilpolierwerkzeuge mit in Betracht gezogen werden. Vorteilhaft kann eine besonders hohe Genauigkeit der Steinplatten-Kantenbearbeitung erreicht werden.

Wenn die in den Werkzeugeinstellschritten abgespeicherten Profilkoordinaten mit Koordinaten einer zu bearbeitenden Seitenkante einer Steinplatte überlagert werden, kann vorteilhaft eine besonders effektive und/oder besonders genaue Bearbeitung der Seitenkante der Steinplatte ermöglicht werden.

Wenn zudem die in den Werkzeugmessschritten ermittelten Profilkoordinaten der einzelnen Profilbearbeitungswerkzeuge des Satzes von Profilbearbeitungswerkzeugen in den Werkzeugeinstellschritten möglichst exakt überlagert, insbesondere aufeinandergelegt, werden, kann vorteilhaft eine besonders genaue Bearbeitung der Seitenkante der Steinplatte ermöglicht werden, wodurch insbesondere eine besonders glatte und gleichmäßige Kantenfläche der Steinplatte erreicht werden kann.

Wenn alternativ die in den Werkzeugmessschritten ermittelten Profilkoordinaten der einzelnen Profilbearbeitungswerkzeuge des Satzes von Profilbearbeitungswerkzeugen in den Werkzeugeinstellschritten mit einem Offset überlagert werden, kann vorteilhaft ein durch das jeweilige Profilbearbeitungswerkzeug erzeugter Materialabtrag bereits bei der Übergabe der Profilkoordinaten der Profilbearbeitungswerkzeuge an die Werkzeugmaschine berücksichtigt werden. Dadurch kann eine Bedienung der Werkzeugmaschine vorteilhaft erleichtert werden, beispielsweise indem keine Informationen über einen Nominalabtrag der Profilbearbeitungswerkzeuge oder dergleichen in die Werkzeugmaschine eingegeben werden müssen und/oder indem auf eine Überwachung des Materialabtrags während eines Bearbeitungsschritts verzichtet werden kann. Insbesondere ist dabei das Profilfräswerkzeug mit der feinsten Körnung, insbesondere Diamantkörnung, der Bearbeitungsoberfläche frei von einem Offset. Insbesondere steigt dabei der Offset der Profilfräswerkzeuge mit steigender Körnung der Bearbeitungsoberfläche.

Weiterhin wird vorgeschlagen, dass der Offset eine Verschiebung der (jeweiligen mit dem Offset versehenen) Profilkoordinaten in eine Richtung parallel zu der Haupterstreckungsebene der zu bearbeitenden Steinplatte bewirkt. Dadurch kann vorteilhaft bereits durch die Festlegung der Profilkoordinaten ein maximaler Materialabtrag eines Profilfräswerkzeugs oder ein maximaler Druck eines Profilpolierwerkzeugs eingestellt werden. Unter einer "Haupterstreckungsebene" eines Objekts, insbesondere der Steinplatte, soll insbesondere eine Ebene verstanden werden, welche parallel zu einer größten Seitenfläche eines kleinsten gedachten Quaders ist, welcher das Objekt, insbesondere die Steinplatte, gerade noch vollständig umschließt, und insbesondere durch den Mittelpunkt des Quaders verläuft.

Außerdem wird vorgeschlagen, dass ein, zumindest einem der als Profilfräswerkzeuge ausgebildeten Profilbearbeitungswerkzeuge des Satzes von Profilbearbeitungswerkzeugen zugeordneter Offset relativ zu den ermittelten Profilkoordinaten des, insbesondere direkt, zuvor vermessenen Profilfräswerkzeugs des Satzes von Profilbearbeitungswerkzeugen eingestellt wird. Dadurch kann vorteilhaft eine präzise Bearbeitung der Steinplatte ermöglicht werden, insbesondere ohne dabei einen Materialabtrag oder eine Bewegung der Profilfräswerkzeuge durch die Werkzeugmaschine überwachen zu müssen. Vorteilhaft kann jeweils etwas Material für den durch das nächste Profilfräswerkzeug erzeugten Materialabtrag übriggelassen werden, so dass auf besonders einfache Weise eine gewünschte Kantenposition der fertig bearbeiteten Steinplatte erreicht werden kann.

Ferner wird vorgeschlagen, dass ein, zumindest einem der als Profilfräswerkzeuge ausgebildeten Profilbearbeitungswerkzeuge des Satzes von Profilbearbeitungswerkzeugen zugeordneter Offset einem, insbesondere von einem Hersteller dieses Profilfräswerkzeugs, vorgegebenen idealen Materialabtragwert dieses Profilfräswerkzeugs entspricht. Dadurch kann vorteilhaft eine besonders hohe Lebensdauer der Profilfräswerkzeuge erreicht werden, wodurch insbesondere Kosten gering gehalten werden können.

Zusätzlich wird vorgeschlagen, dass ein, zumindest einem der, insbesondere als Profilpolierwerkzeuge ausgebildeten, Profilbearbeitungswerkzeuge des Satzes von Profilbearbeitungswerkzeugen zugeordneter Offset relativ zu den ermittelten Profilkoordinaten des zuvor vermessenen Profilfräswerkzeugs aus dem Satz von Profilbearbeitungswerkzeugen, welches die feinste Bearbeitungsoberfläche aller Profilfräswerkzeuge des Satzes von Profilbearbeitungswerkzeugen aufweist, eingestellt wird. Dadurch kann vorteilhaft auf besonders einfache Weise eine gewünschte Kantenposition der fertig bearbeiteten und polierten Steinplatte erreicht werden.

Des Weiteren wird vorgeschlagen, dass zumindest ein, in einem Werkzeugeinstellschritt einem Profilfräswerkzeug zugeordneter Offset eine entgegengesetzte Richtung aufweist wie ein in einem weiteren Werkzeugeinstellschritt einem Profilpolierwerkzeug zugeordneter Offset. Dadurch kann vorteilhaft einerseits mittels des Offsets der Profilfräswerkzeuge, d.h. lediglich mittels der an die Werkzeugmaschine übermittelten (angepassten) Profildaten der Profilfräswerkzeuge, ein Material für einen Materialabtrag des in dem Bearbeitungszyklus folgenden Profilfräswerkzeugs stehen gelassen werden und andererseits mittels des Offsets der Profilpolierwerkzeuge, d.h. lediglich mittels der an die Werkzeugmaschine übermittelten (angepassten) Profildaten der Profilpolierwerkzeuge, ein Polierdruck eingestellt werden, insbesondere jeweils ohne dazu gesonderte Einstellungen an der Werkzeugmaschine zu erfordern. Insbesondere ist der jeweilige Offset der Profilpolierwerkzeuge derart gewählt, dass ein für das jeweilige Profilpolierwerkzeug idealer Polierdruck durch das von der Werkzeugmaschine erzeugte Andrücken des Profilpolierwerkzeugs an die Steinplatte auf die Steinplattenkante ausgeübt wird. Vorteilhaft kann durch eine optimale Einstellung des Polierdrucks eine Beschädigung von Profilpolierwerkzeugen, beispielsweise ein Zerspringen durch zu hohen Anpressdruck, vermieden werden, wodurch vorteilhaft Kosten gering gehalten werden können.

Zudem wird vorgeschlagen, dass in zumindest einem Ausgabeschritt die ermittelten und aufeinander abgestimmten Profilkoordinaten in einer maschinenlesbaren Form an eine Werkzeugmaschine, insbesondere eine CNCgesteuerte Fräs- und Poliermaschine, vorzugsweise ein Bearbeitungszentrum, beispielsweise über ein Distributed Numerical Control (DNC) System, übertragen werden. Dadurch kann insbesondere ein vorteilhafter Bearbeitungsablauf der Steinplatte zur Erzeugung der gewünschten Kantenform ermöglicht werden, welcher vorteilhaft keine gesonderte Einstellung an der Werkzeugmaschine (idealer Materialabtrag, idealer Anpressdruck, etc.) erfordert.

Zusätzlich wird vorgeschlagen, dass ein, zumindest einem der Profilfräswerkzeuge des Satzes von Profilbearbeitungswerkzeugen zugeordneter Offset bewirkt, dass ein Datensatz mit einem virtuell vergrößerten Profilfräswerkzeug an die Werkzeugmaschine übertragen wird. Dadurch kann vorteilhaft erreicht werden, dass, ohne dass zusätzliche Einstellungen an der Werkzeugmaschine vorgenommen werden müssen, die Profilfräswerkzeuge jeweils genug Material der Steinplatte für den idealen Materialabtrag der im Steinplatten-Bearbeitungszyklus folgenden Profilfräswerkzeuge übriglassen. Vorteilhaft kann eine besonders präzise Positionierung der bearbeiteten Steinplattenkante erreicht werden. Unter einem "virtuell vergrößerten Profilfräswerkzeug" soll insbesondere verstanden werden, dass die gemessenen Profildaten eines Profilfräswerkzeugs mit dem entsprechenden Offset versehen werden und dadurch die in dem übertragenen Datensatz enthaltenen Abmessungen des Profilfräswerkzeugs (um den Offsetwert) größer sind als die realen Abmessungen des Profilfräswerkzeugs. Insbesondere soll unter dem virtuell vergrößerten Profilfräswerkzeug ein um und/oder durch den Offset vergrößertes virtuelles Modell des Profilfräswerkzeugs verstanden werden.

Außerdem wird vorgeschlagen, dass ein, zumindest einem der Profilpolierwerkzeuge des Satzes von Profilbearbeitungswerkzeugen zugeordneter Offset bewirkt, dass ein Datensatz mit einem virtuell verkleinerten Profilpolierwerkzeug an die Werkzeugmaschine übertragen wird. Dadurch kann vorteilhaft erreicht werden, dass ohne dass zusätzliche Einstellungen an der Werkzeugmaschine vorgenommen werden müssen, die Profilpolierwerkzeuge mit einem idealen Polierdruck die zuvor von den Profilfräswerkzeugen in dem Steinplatten-Bearbeitungszyklus gefrästen Steinplattenkanten polieren. Unter einem "virtuell verkleinerten Profilpolierwerkzeug" soll insbesondere verstanden werden, dass die gemessenen Profildaten eines Profilpolierwerkzeugs mit dem entsprechenden Offset versehen werden und dadurch die in dem übertragenen Datensatz enthaltenen Abmessungen des Profilpolierwerkzeugs (um den Offsetwert) kleiner sind als die realen Abmessungen des Profilpolierwerkzeugs. Insbesondere soll unter dem virtuell verkleinerten Profilfräswerkzeug ein um und/oder durch den Offset verkleinertes virtuelles Modell des Profilpolierwerkzeugs verstanden werden.

Wenn zumindest die in dem ersten Werkzeugeinstellschritt abgespeicherten Profilkoordinaten automatisch relativ zu der zu bearbeitenden Steinplatte ausgerichtet werden, kann vorteilhaft eine besonders einfache Bedienung des Werkzeugeinstell- und Werkzeugmessgeräts erreicht werden.

Wenn zudem zu der Ausrichtung der Profilkoordinaten relativ zu der Steinplatte ein Punkt der Arbeitskontur des in dem ersten Werkzeugmessschritt vermessenen Profilbearbeitungswerkzeugs ermittelt wird, an dem die Arbeitskontur einen maximalen Krümmungsradius annimmt, kann vorteilhaft eine besonders zuverlässige automatische Positionierung und/oder Ausrichtung der Profilkoordinaten relativ zu der zu bearbeitenden Steinplatte erreicht werden.

Ferner wird ein optisches Werkzeugeinstell- und Werkzeugmessgerät zur Durchführung des optischen Mess- und Einstellverfahrens vorgeschlagen. Dadurch kann vorteilhaft eine hohe Präzision, insbesondere eines an den Werkzeugmessschritt und den Werkzeugeinstellschritt anschließenden Steinplatten-Bearbeitungsschritts, erreicht werden. Vorteilhaft können Stillstandzeiten von Werkzeugmaschinen reduziert werden. Außerdem kann vorteilhaft durch eine hohe Einstellpräzision von Profilbearbeitungswerkzeugen eine Lebensdauer der Profilbearbeitungswerkzeuge maximiert werden. Vorteilhaft können Kosten, insbesondere Stückzahlkosten, gesenkt werden. Vorzugsweise weist das Werkzeugeinstell- und Werkzeugmessgerät eine Steuer- und/oder Regeleinheit auf, welche dazu vorgesehen ist, das optische Mess- und Einstellverfahren durchzuführen. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einem Prozessor und mit einer Speichereinheit (z.B. RAM, ROM, HDD, etc.) sowie mit einem in der Speichereinheit gespeicherten Betriebsprogramm verstanden werden, welches zur Durchführung des optischen Mess- und Einstellverfahrens von dem Prozessor aufgerufen und ausgeführt werden kann.

Das erfindungsgemäße optische Mess- und Einstellverfahren und das erfindungsgemäße optische Werkzeugeinstell- und Werkzeugmessgerät soll hierbei nicht auf die oben beschriebene Anwendung und Ausführungsform beschränkt sein. Insbesondere kann das erfindungsgemäße optische Mess- und Einstellverfahren und das erfindungsgemäße optische Werkzeugeinstell- und Werkzeugmessgerät zu einer Erfüllung einer hierin beschriebenen Funktionsweise eine von einer hierin genannten Anzahl von einzelnen Elementen, Bauteilen, Verfahrensschritten und Einheiten abweichende Anzahl aufweisen.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und im Rahmen der beanspruchten Erfindung zu sinnvollen weiteren Kombinationen zusammenfassen.

Es zeigen:
- Fig. 1: eine schematische Darstellung eines mit einer Werkzeugmaschine kommunizierenden Werkzeugeinstell- und Werkzeugmessgeräts,
- Fig. 2: eine schematische Darstellung eines Satzes von Profilbearbeitungswerkzeugen in einer Haltevorrichtung,
- Fig. 3a: eine schematische Seitenansicht eines Profilfräswerkzeugs des Satzes von Profilbearbeitungswerkzeugen,
- Fig. 3b: eine schematische Seitenansicht eines Profilpolierwerkzeugs des Satzes von Profilbearbeitungswerkzeugen,
- Fig. 4a: eine schematische Schnittansicht einer Steinplatte mit einer ersten Kantenform,
- Fig. 4b: eine schematische Schnittansicht einer beispielhaften Steinplatte mit einer zweiten Kantenform,
- Fig. 4c: eine schematische Schnittansicht einer beispielhaften Steinplatte mit einer dritten Kantenform,
- Fig. 4d: eine schematische Schnittansicht einer beispielhaften Steinplatte mit einer vierten Kantenform,
- Fig. 4e: eine schematische Schnittansicht einer beispielhaften Steinplatte mit einer fünften Kantenform,
- Fig. 4f: eine schematische Schnittansicht einer beispielhaften Steinplatte mit einer sechsten Kantenform,
- Fig. 5: ein schematisches Ablaufdiagramm eines optischen Mess- und Einstellverfahrens,
- Fig. 6a: eine schematische Repräsentation von gemessenen Profilkoordinaten der Profilbearbeitungswerkzeuge mit einem ersten Offset,
- Fig. 6b: eine schematische Repräsentation von gemessenen Profilkoordinaten der Profilbearbeitungswerkzeuge mit einem zweiten Offset und
- Fig. 6c: eine schematische Repräsentation von gemessenen Profilkoordinaten der Profilbearbeitungswerkzeuge mit einem dritten Offset.

### Beschreibung des Ausführungsbeispiels

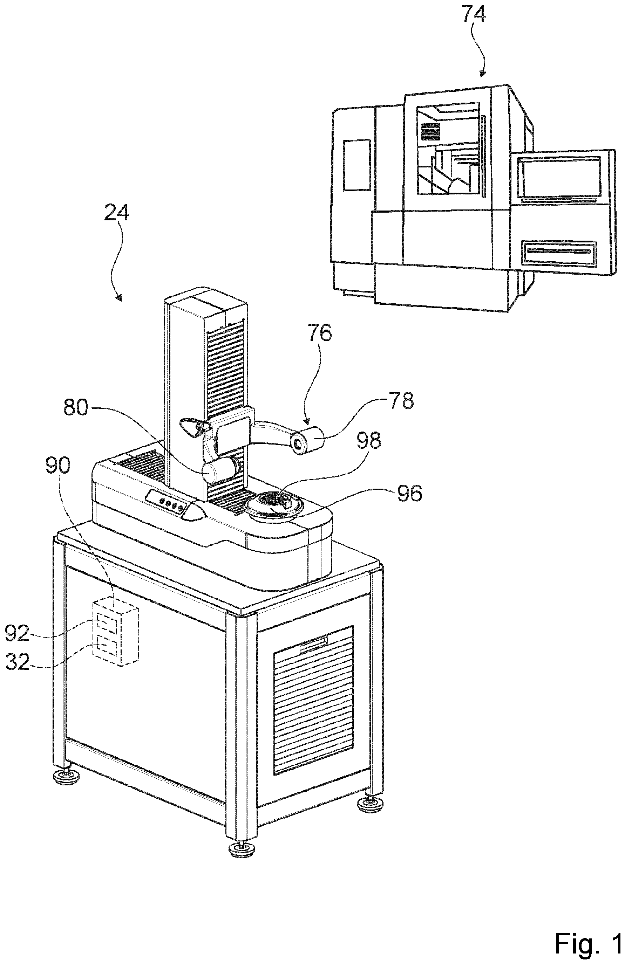

Fig. 1 zeigt ein optisches Werkzeugeinstell- und Werkzeugmessgerät 24. Das Werkzeugeinstell- und Werkzeugmessgerät 24 ist zur Durchführung des hierin beschriebenen optischen Mess- und Einstellverfahrens vorgesehen. Das Werkzeugeinstell- und Werkzeugmessgerät 24 ist zu einer optischen Vermessung von Werkzeugen vorgesehen. Das Werkzeugeinstell- und Werkzeugmessgerät 24 ist zu einem Einstellen von Werkzeugen vorgesehen. Das Werkzeugeinstell- und Werkzeugmessgerät 24 weist erfindungsgemäß eine optische Messeinrichtung 76 mit einer Kamera 78 und einer Beleuchtung 80 auf. Im beispielhaft dargestellten Fall bildet die optische Messeinrichtung 76 eine Durchlichtmessanordnung aus. Alternativ ist jedoch auch denkbar, dass die optische Messeinrichtung 76 eine Auflichtmessanordnung ausbildet. Das Werkzeugeinstell- und Werkzeugmessgerät 24 weist eine rotierbare Spindeleinheit 96 auf, die einen Werkzeugaufnahmebereich 98 zur Aufnahme des zu vermessenden Werkzeugs oder eines Werkzeugfutters mit dem zu vermessenden Werkzeug ausbildet. Das Werkzeugeinstell- und Werkzeugmessgerät 24 weist eine Steuer- und/oder Regeleinheit 90 auf. Die Steuer- und/oder Regeleinheit 90 umfasst einen Prozessor 92 und eine Speichereinheit 32 mit einem Speichermedium. Die Steuer- und/oder Regeleinheit 90 ist dazu vorgesehen, das Werkzeugeinstell- und Werkzeugmessgerät 24, insbesondere die Durchführung des optischen Mess- und Einstellverfahrens durch das Werkzeugeinstell- und Werkzeugmessgerät 24, zu steuern und/oder zu regeln. Im vorliegenden Fall ist das Werkzeugeinstell- und Werkzeugmessgerät 24 speziell zu einem kombinierten optischen Vermessen und Einstellen von mehreren einzelnen Profilbearbeitungswerkzeugen 10, 12, 48, 50, 52, 54, 56 vorgesehen. Zudem zeigt die Fig. 1 eine beispielhafte Werkzeugmaschine 74. Die Werkzeugmaschine 74 ist zu einer Bearbeitung einer Steinplatte 22 mittels Profilbearbeitungswerkzeugen 10, 12, 48, 50, 52, 54, 56 vorgesehen.

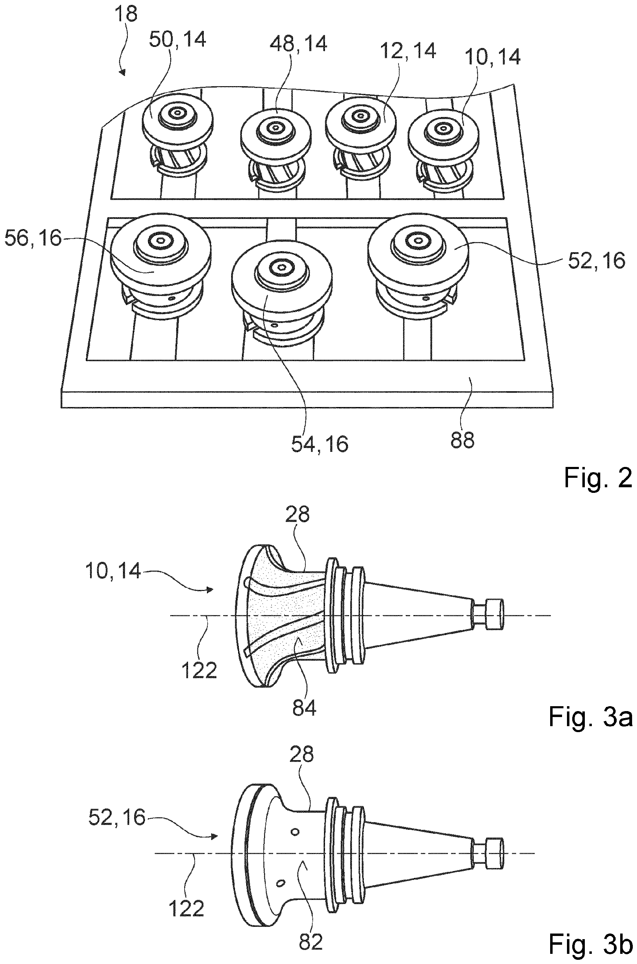

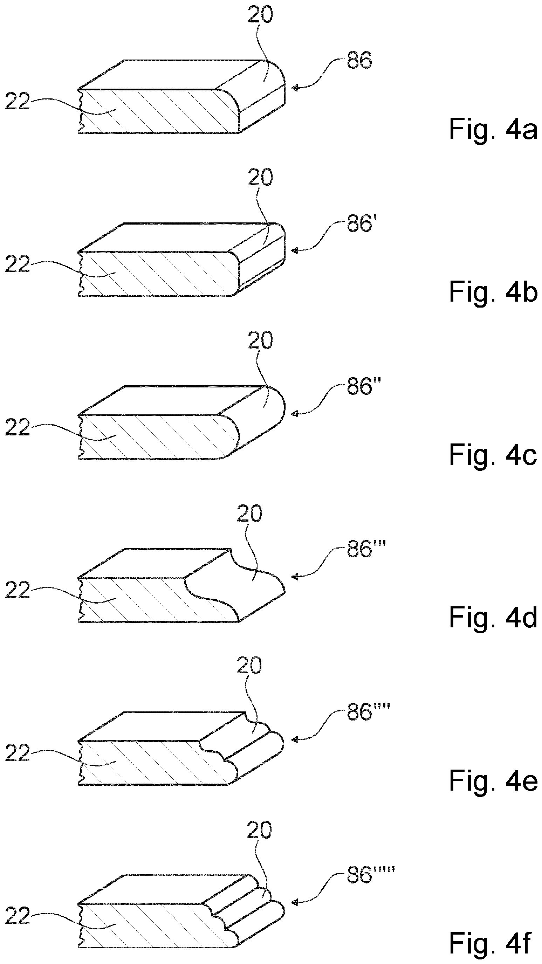

In der Fig. 2 sind beispielhaft sieben in einer Haltevorrichtung 88 befestigte Profilbearbeitungswerkzeuge 10, 12, 48, 50, 52, 54, 56 dargestellt. Die sieben Profilbearbeitungswerkzeuge 10, 12, 48, 50, 52, 54, 56 bilden einen Satz von Profilbearbeitungswerkzeugen 18 aus. Die einzelnen Profilbearbeitungswerkzeuge 10, 12, 48, 50, 52, 54, 56 des Satzes von Profilbearbeitungswerkzeugen 18 sind zu einer sukzessiven Bearbeitung von Seitenkanten 20 von Steinplatten 22 (siehe auch Fig. 4a bis 4f) vorgesehen. Der Satz von Profilbearbeitungswerkzeugen 18 bildet eine zusammengehörige Einheit von Profilbearbeitungswerkzeugen 10, 12, 48, 50, 52, 54, 56 aus, welche für eine Erzeugung einer bestimmten Seitenkantenform der Steinplatte 22 notwendig sind.

Der Satz von Profilbearbeitungswerkzeugen 18 umfasst im dargestellten Beispiel vier als Profilfräswerkzeuge 14, insbesondere als Profilierräder, ausgebildete Profilbearbeitungswerkzeuge 10, 12, 48, 50. Das erste Profilbearbeitungswerkzeug 10 ist als ein Profilfräswerkzeug 14, insbesondere ein Profilierrad, ausgebildet. Das zweite Profilbearbeitungswerkzeug 12 ist als ein Profilfräswerkzeug 14, insbesondere ein Profilierrad, ausgebildet. Das dritte Profilbearbeitungswerkzeug 48 ist als ein Profilfräswerkzeug 14, insbesondere ein Profilierrad, ausgebildet. Das vierte Profilbearbeitungswerkzeug 50 ist als ein Profilfräswerkzeug 14, insbesondere ein Profilierrad, ausgebildet. Die vier als Profilfräswerkzeuge 14 ausgebildeten Profilbearbeitungswerkzeuge 10, 12, 48, 50 weisen jeweils unterschiedlich grobe Bearbeitungsoberflächen 84 auf. Das erste als Profilfräswerkzeug 14 ausgebildete Profilbearbeitungswerkzeug 10 weist von allen als Profilfräswerkzeug 14 ausgebildeten Profilbearbeitungswerkzeugen 10, 12, 48, 50 die feinste Bearbeitungsoberfläche 84, insbesondere die Bearbeitungsoberfläche 84 mit der feinsten Körnung, auf. Das zweite als Profilfräswerkzeug 14 ausgebildete Profilbearbeitungswerkzeug 12 weist von allen als Profilfräswerkzeug 14 ausgebildeten Profilbearbeitungswerkzeugen 10, 12, 48, 50 die zweitfeinste Bearbeitungsoberfläche 84, insbesondere die Bearbeitungsoberfläche 84 mit der zweitfeinsten Körnung, auf. Das dritte als Profilfräswerkzeug 14 ausgebildete Profilbearbeitungswerkzeug 48 weist von allen als Profilfräswerkzeug 14 ausgebildeten Profilbearbeitungswerkzeugen 10, 12, 48, 50 die drittfeinste Bearbeitungsoberfläche 84, insbesondere die Bearbeitungsoberfläche 84 mit der drittfeinsten Körnung, auf. Das vierte als Profilfräswerkzeug 14 ausgebildete Profilbearbeitungswerkzeug 50 weist von allen als Profilfräswerkzeug 14 ausgebildeten Profilbearbeitungswerkzeugen 10, 12, 48, 50 die gröbste Bearbeitungsoberfläche 84, insbesondere die Bearbeitungsoberfläche 84 mit der gröbsten Körnung, auf. Die Bearbeitungsoberfläche 84 ist an einem radialen Außenumfang der als Profilfräswerkzeug 14 ausgebildeten Profilbearbeitungswerkzeuge 10, 12, 48, 50 angeordnet. Zu einer Bearbeitung der Steinplatte 22 wird das als Profilfräswerkzeug 14 ausgebildete Profilbearbeitungswerkzeug 10, 12, 48, 50 rotiert und mit seinem radialen Außenumfang, d.h. insbesondere mit der Bearbeitungsoberfläche 84, in Kontakt mit der Seitenkante 20 der Steinplatte 22 gebracht.

Der Satz von Profilbearbeitungswerkzeugen 18 umfasst im dargestellten Beispiel drei als Profilpolierwerkzeuge 16, insbesondere als Profilpolierräder, ausgebildete Profilbearbeitungswerkzeuge 52, 54, 56. Das fünfte Profilbearbeitungswerkzeug 52 ist als ein Profilpolierwerkzeug 16, insbesondere ein Profilpolierrad, ausgebildet. Das sechste Profilbearbeitungswerkzeug 54 ist als ein Profilpolierwerkzeug 16, insbesondere ein Profilpolierrad, ausgebildet. Das siebte Profilbearbeitungswerkzeug 56 ist als ein Profilpolierwerkzeug 16, insbesondere ein Profilpolierrad, ausgebildet. Die drei als Profilpolierwerkzeuge 16 ausgebildeten Profilbearbeitungswerkzeuge 52, 54, 56 weisen jeweils unterschiedlich harte Polieroberflächen 82 auf. Das erste als Profilpolierwerkzeug 16 ausgebildete Profilbearbeitungswerkzeug 52 weist von allen als Profilpolierwerkzeuge 16 ausgebildeten Profilbearbeitungswerkzeugen 52, 54, 56 die weichste Polieroberfläche 82, insbesondere die Polieroberfläche 82 mit dem weichsten Gummimaterial, auf. Das zweite als Profilpolierwerkzeug 16 ausgebildete Profilbearbeitungswerkzeug 54 weist von allen als Profilpolierwerkzeuge 16 ausgebildeten Profilbearbeitungswerkzeugen 52, 54, 56 die zweitweichste Polieroberfläche 82, insbesondere die Polieroberfläche 82 mit dem zweitweichsten Gummimaterial, auf. Das dritte als Profilpolierwerkzeug 16 ausgebildete Profilbearbeitungswerkzeug 56 weist von allen als Profilpolierwerkzeuge 16 ausgebildeten Profilbearbeitungswerkzeugen 52, 54, 56 die härteste Polieroberfläche 82, insbesondere die Polieroberfläche 82 mit dem härtesten Gummimaterial, auf. Die Polieroberfläche 82 ist an einem radialen Außenumfang der als Profilpolierwerkzeug 16 ausgebildeten Profilbearbeitungswerkzeuge 52, 54, 56 angeordnet. Zu einer Bearbeitung der Steinplatte 22 wird das als Profilpolierwerkzeug 16 ausgebildete Profilbearbeitungswerkzeug 10, 12, 48, 50 rotiert und mit seinem radialen Außenumfang, d.h. insbesondere mit der Polieroberfläche 82, in Kontakt mit der Seitenkante 20 der Steinplatte 22 gebracht.

Alle Profilbearbeitungswerkzeuge 10, 12, 48, 50, 52, 54, 56, insbesondere alle Profilfräswerkzeuge 14 und alle Profilpolierwerkzeuge 16, weisen eine zumindest im Wesentlichen identische Arbeitskontur 28, insbesondere Fräskontur der Bearbeitungsoberfläche 84 (vgl. Fig. 3a) oder Polierkontur der Polieroberfläche 82 (vgl. Fig. 3b), auf. Die Arbeitskontur 28 der Profilbearbeitungswerkzeuge 10, 12, 48, 50, 52, 54, 56 ist teilweise konkav gekrümmt. Die Arbeitskontur 28 der Profilbearbeitungswerkzeuge 10, 12, 48, 50, 52, 54, 56 ist abschnittsweise konkav gekrümmt. Die Arbeitskontur 28 der Profilbearbeitungswerkzeuge 10, 12, 48, 50, 52, 54, 56 bildet eine gewünschte Kantenform 86 der zu bearbeitenden Steinplatte 22 nach. Die Profilbearbeitungswerkzeuge 10, 12, 48, 50, 52, 54, 56 sind im Wesentlichen rotationssymmetrisch um eine Rotationsachse 122 ausgebildet. Die Profilbearbeitungswerkzeuge 10, 12, 48, 50, 52, 54, 56 sind dazu vorgesehen, zu einer Bearbeitung der Steinplatte 22 um die Rotationsachse 122 rotiert zu werden (vgl. auch Fig. 3a und 3b).

Die Figuren 4a bis 4f zeigen verschiedene beispielhafte Kantenformen 86, 86', 86", 86"', 86"", 86‴ʺ von Seitenkanten 20 von Steinplatten 22. Die in der Fig. 4a gezeigte Kantenform 86 entspricht der durch den beispielhaft in der Fig. 2 dargestellten Satz von Profilbearbeitungswerkzeugen 18 erzeugbaren Außenform der Seitenkante 20 der Steinplatte 22. Die in Fig. 4a gezeigte Kantenform 86 ist auf einer Oberseite abgerundet. Die in den Figuren 4b bis 4f gezeigten Kantenformen 86', 86", 86"', 86ʺʺ, 86‴ʺ benötigen jeweils Sätze von andersartig geformten Profilbearbeitungswerkzeugen. Bei der in der Fig. 4b gezeigten Kantenform 86' sind die obere und die untere Kante abgerundet. In der Fig. 4c ist eine sogenannte "Bullnose"-Kantenform dargestellt. In der Fig. 4d ist eine sogenannte "Eselsrücken"-Kantenform oder "Ogee-Kantenform" dargestellt. In der Fig. 4e ist eine Kombination aus der "Eselsrücken"-Kantenform (oben) und der "Bullnose"-Kantenform (unten) dargestellt. In der Fig. 4d ist eine dreifach gekrümmte oder sogenannte "Triple-Pencil"-Kantenform dargestellt.

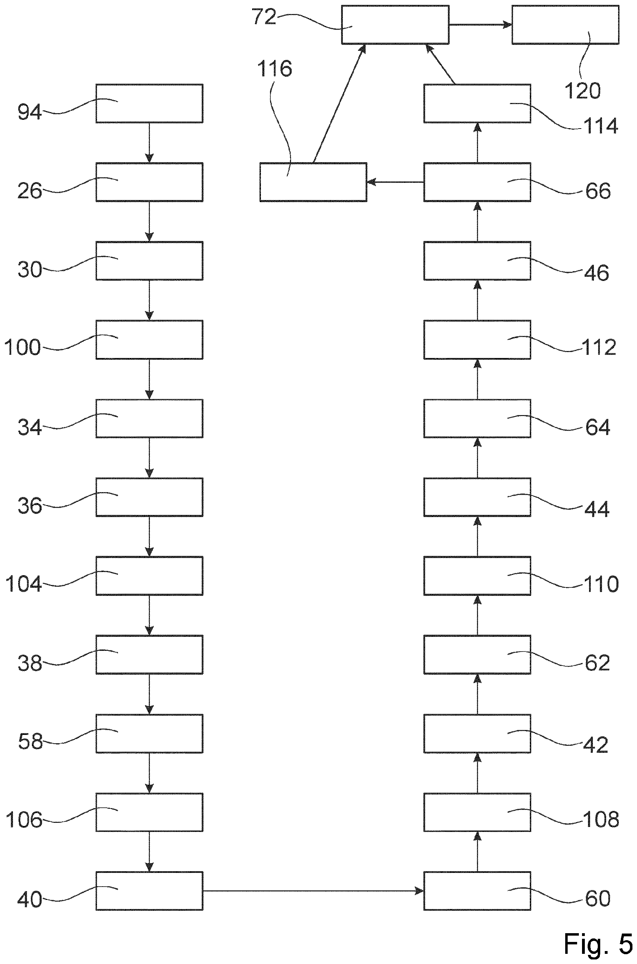

Die Fig. 5 zeigt ein Ablaufdiagramm des optischen Mess- und Einstellverfahrens zu dem kombinierten Vermessen und Einstellen des die Mehrzahl an einzelnen Profilbearbeitungswerkzeugen 10, 12, 48, 50, 52, 54, 56 umfassenden Satzes von Profilbearbeitungswerkzeugen 18. Die Verfahrensschritte 26, 30, 34, 36, 38, 40, 42, 44, 46, 58, 60, 62, 64, 66, 72, 94, 100, 104, 106, 108, 110, 112, 114, 116 des Mess- und Einstellverfahrens werden mit Hilfe des Werkzeugeinstell- und Werkzeugmessgeräts 24 durchgeführt.

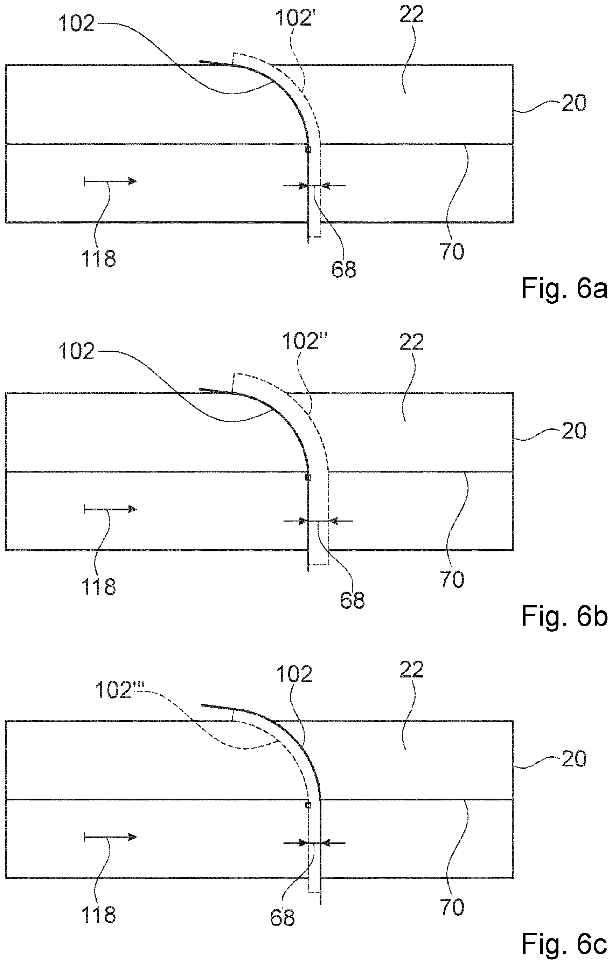

In einem Verfahrensschritt 94 wird das erste Profilbearbeitungswerkzeug 10 des Satzes von Profilbearbeitungswerkzeugen 18 in die Spindeleinheit 96 des Werkzeugeinstell- und Werkzeugmessgeräts 24 eingesetzt. In einem ersten Werkzeugmessschritt 26 wird mit dem Werkzeugeinstell- und Werkzeugmessgerät 24 die Arbeitskontur 28 des ersten Profilbearbeitungswerkzeugs 10 des Satzes von Profilbearbeitungswerkzeugen 18 optisch erfasst und/oder vermessen. In einem ersten Werkzeugeinstellschritt 30 werden der in dem ersten Werkzeugmessschritt 26 erfasste Arbeitskontur 28 des ersten Profilbearbeitungswerkzeugs 10 Profilkoordinaten 102 zugeordnet (siehe auch Figuren 6a bis 6c). Die zugeordneten Profilkoordinaten 102 werden in dem ersten Werkzeugeinstellschritt 30 in der Speichereinheit 32 des Werkzeugeinstell- und Werkzeugmessgeräts 24 abgespeichert. Die in dem ersten Werkzeugeinstellschritt 30 abgespeicherten Profilkoordinaten 102 werden automatisch relativ zu einer Position der zu bearbeitenden Steinplatte 22 ausgerichtet. Dies kann entweder bereits auf dem Werkzeugeinstell- und Werkzeugmessgerät 24 geschehen oder erst nach einer Übertragung an die Werkzeugmaschine 74 auf der Werkzeugmaschine 74 selbst. In dem ersten Werkzeugmessschritt 26 wird das Profilfräswerkzeug 14 des Satzes von Profilbearbeitungswerkzeugen 18 vermessen, welches die am wenigsten groben Bearbeitungsoberfläche 84, insbesondere die feinste Körnung, aufweist. Auf den ersten Werkzeugmessschritt 26 folgende Werkzeugmessschritte 34, 38, 40, in denen Profilfräswerkzeuge 14 vermessen werden, werden zeitlich nach aufsteigender Grobheit der Bearbeitungsoberflächen 84 der Profilfräswerkzeuge 14 sortiert. Andere zeitliche Sortierungen und/oder Abfolgen von auf den ersten Werkzeugmessschritt 26 folgenden weiteren Werkzeugmessschritten 34, 38, 40, 42, 44, 46 sind jedoch auch denkbar. In jedem Fall wird jedoch eines der Profilfräswerkzeuge 14 des Satzes von Profilbearbeitungswerkzeugen 18 vermessen und eingestellt, bevor ein oder mehrere Profilpolierwerkzeuge 16 des Satzes von Profilbearbeitungswerkzeugen 18 vermessen und eingestellt werden. In einem weiteren Verfahrensschritt 100 wird das erste Profilbearbeitungswerkzeug 10 aus der Spindeleinheit 96 entnommen und das zweite Profilbearbeitungswerkzeug 12 des Satzes von Profilbearbeitungswerkzeugen 18 in die Spindeleinheit 96 eingesetzt.

In einem, insbesondere zeitlich nach dem ersten Werkzeugmessschritt 26 stattfindenden, zweiten Werkzeugmessschritt 34 wird die Arbeitskontur 28 des zweiten Profilbearbeitungswerkzeugs 12 des Satzes von Profilbearbeitungswerkzeugen 18 erfasst und/oder vermessen. In einem zweiten Werkzeugeinstellschritt 36 werden der in dem zweiten Werkzeugmessschritt 34 erfassten Arbeitskontur 28 des zweiten Profilbearbeitungswerkzeugs 12 Profilkoordinaten 102 zugeordnet. Die in dem zweiten Werkzeugmessschritt 34 ermittelten Profilkoordinaten 102 des zweiten Profilbearbeitungswerkzeugs 12 werden in dem zweiten Werkzeugeinstellschritt 36 auf die zuvor in dem ersten Werkzeugmessschritt 26 ermittelten Profilkoordinaten 102 des ersten Profilbearbeitungswerkzeugs 10 abgestimmt. In dem zweiten Werkzeugeinstellschritt 36 werden die Profilkoordinaten 102 der Arbeitskontur 28 des ersten Profilbearbeitungswerkzeugs 10 als Referenzkoordinaten für eine relative Positionierung von Profilkoordinaten 102 der erfassten und/oder vermessenen Arbeitskontur 28 des zweiten Profilbearbeitungswerkzeugs 12 eingegeben. Die zugeordneten Profilkoordinaten 102 werden in dem zweiten Werkzeugeinstellschritt 36 in der Speichereinheit 32 des Werkzeugeinstell- und Werkzeugmessgeräts 24 abgespeichert. In einem weiteren Verfahrensschritt 104 wird das zweite Profilbearbeitungswerkzeug 12 aus der Spindeleinheit 96 entnommen und das dritte Profilbearbeitungswerkzeug 48 des Satzes von Profilbearbeitungswerkzeugen 18 in die Spindeleinheit 96 eingesetzt.

In einem, insbesondere zeitlich nach dem zweiten Werkzeugmessschritt 34 stattfindenden, dritten Werkzeugmessschritt 38 wird die Arbeitskontur 28 des dritten Profilbearbeitungswerkzeugs 48 des Satzes von Profilbearbeitungswerkzeugen 18 erfasst und/oder vermessen. In einem dritten Werkzeugeinstellschritt 58 werden der in dem dritten Werkzeugmessschritt 38 erfassten Arbeitskontur 28 des dritten Profilbearbeitungswerkzeugs 48 Profilkoordinaten 102 zugeordnet. Die in dem dritten Werkzeugmessschritt 38 ermittelten Profilkoordinaten 102 des dritten Profilbearbeitungswerkzeugs 48 werden in dem dritten Werkzeugeinstellschritt 58 auf die zuvor in dem ersten Werkzeugmessschritt 26 ermittelten Profilkoordinaten 102 des ersten Profilbearbeitungswerkzeugs 10 abgestimmt. In dem dritten Werkzeugeinstellschritt 58 werden die Profilkoordinaten 102 der Arbeitskontur 28 des ersten Profilbearbeitungswerkzeugs 10 als Referenzkoordinaten für eine relative Positionierung von Profilkoordinaten 102 der erfassten und/oder vermessenen Arbeitskontur 28 des dritten Profilbearbeitungswerkzeugs 48 eingegeben. Die zugeordneten Profilkoordinaten 102 werden in dem dritten Werkzeugeinstellschritt 58 in der Speichereinheit 32 des Werkzeugeinstell- und Werkzeugmessgeräts 24 abgespeichert. In einem weiteren Verfahrensschritt 106 wird das dritte Profilbearbeitungswerkzeug 48 aus der Spindeleinheit 96 entnommen und das vierte Profilbearbeitungswerkzeug 50 des Satzes von Profilbearbeitungswerkzeugen 18 in die Spindeleinheit 96 eingesetzt.

In einem, insbesondere zeitlich nach dem dritten Werkzeugmessschritt 38 stattfindenden, vierten Werkzeugmessschritt 40 wird die Arbeitskontur 28 des vierten Profilbearbeitungswerkzeugs 50 des Satzes von Profilbearbeitungswerkzeugen 18 erfasst und/oder vermessen. In einem vierten Werkzeugeinstellschritt 60 werden der in dem vierten Werkzeugmessschritt 40 erfassten Arbeitskontur 28 des vierten Profilbearbeitungswerkzeugs 50 Profilkoordinaten 102 zugeordnet. Die in dem vierten Werkzeugmessschritt 40 ermittelten Profilkoordinaten 102 des vierten Profilbearbeitungswerkzeugs 50 werden in dem vierten Werkzeugeinstellschritt 60 auf die zuvor in dem ersten Werkzeugmessschritt 26 ermittelten Profilkoordinaten 102 des ersten Profilbearbeitungswerkzeugs 10 abgestimmt. In dem vierten Werkzeugeinstellschritt 60 werden die Profilkoordinaten 102 der Arbeitskontur 28 des ersten Profilbearbeitungswerkzeugs 10 als Referenzkoordinaten für eine relative Positionierung von Profilkoordinaten 102 der erfassten und/oder vermessenen Arbeitskontur 28 des vierten Profilbearbeitungswerkzeugs 50 eingegeben. Die zugeordneten Profilkoordinaten 102 werden in dem vierten Werkzeugeinstellschritt 60 in der Speichereinheit 32 des Werkzeugeinstell- und Werkzeugmessgeräts 24 abgespeichert. In einem weiteren Verfahrensschritt 108 wird das vierte Profilbearbeitungswerkzeug 50 aus der Spindeleinheit 96 entnommen und das fünfte Profilbearbeitungswerkzeug 52 des Satzes von Profilbearbeitungswerkzeugen 18 in die Spindeleinheit 96 eingesetzt.

In einem, insbesondere zeitlich nach dem vierten Werkzeugmessschritt 40 stattfindenden, fünften Werkzeugmessschritt 42 wird die Arbeitskontur 28 des fünften Profilbearbeitungswerkzeugs 52 des Satzes von Profilbearbeitungswerkzeugen 18 erfasst und/oder vermessen. In einem fünften Werkzeugeinstellschritt 62 werden der in dem fünften Werkzeugmessschritt 42 erfassten Arbeitskontur 28 des fünften Profilbearbeitungswerkzeugs 52 Profilkoordinaten 102 zugeordnet. Die in dem fünften Werkzeugmessschritt 42 ermittelten Profilkoordinaten 102 des fünften Profilbearbeitungswerkzeugs 52 werden in dem fünften Werkzeugeinstellschritt 62 auf die zuvor in dem ersten Werkzeugmessschritt 26 ermittelten Profilkoordinaten 102 des ersten Profilbearbeitungswerkzeugs 10 abgestimmt. In dem fünften Werkzeugeinstellschritt 62 werden die Profilkoordinaten 102 der Arbeitskontur 28 des ersten Profilbearbeitungswerkzeugs 10 als Referenzkoordinaten für eine relative Positionierung von Profilkoordinaten 102 der erfassten und/oder vermessenen Arbeitskontur 28 des fünften Profilbearbeitungswerkzeugs 52 eingegeben. Die zugeordneten Profilkoordinaten 102 werden in dem fünften Werkzeugeinstellschritt 62 in der Speichereinheit 32 des Werkzeugeinstell- und Werkzeugmessgeräts 24 abgespeichert. In einem weiteren Verfahrensschritt 110 wird das fünfte Profilbearbeitungswerkzeug 52 aus der Spindeleinheit 96 entnommen und das sechste Profilbearbeitungswerkzeug 54 des Satzes von Profilbearbeitungswerkzeugen 18 in die Spindeleinheit 96 eingesetzt.

In einem, insbesondere zeitlich nach dem fünften Werkzeugmessschritt 42 stattfindenden, sechsten Werkzeugmessschritt 44 wird die Arbeitskontur 28 des sechsten Profilbearbeitungswerkzeugs 54 des Satzes von Profilbearbeitungswerkzeugen 18 erfasst und/oder vermessen. In einem sechsten Werkzeugeinstellschritt 64 werden der in dem sechsten Werkzeugmessschritt 44 erfassten Arbeitskontur 28 des sechsten Profilbearbeitungswerkzeugs 54 Profilkoordinaten 102 zugeordnet. Die in dem sechsten Werkzeugmessschritt 44 ermittelten Profilkoordinaten 102 des sechsten Profilbearbeitungswerkzeugs 54 werden in dem sechsten Werkzeugeinstellschritt 64 auf die zuvor in dem ersten Werkzeugmessschritt 26 ermittelten Profilkoordinaten 102 des ersten Profilbearbeitungswerkzeugs 10 abgestimmt. In dem sechsten Werkzeugeinstellschritt 64 werden die Profilkoordinaten 102 der Arbeitskontur 28 des ersten Profilbearbeitungswerkzeugs 10 als Referenzkoordinaten für eine relative Positionierung von Profilkoordinaten 102 der erfassten und/oder vermessenen Arbeitskontur 28 des sechsten Profilbearbeitungswerkzeugs 54 eingegeben. Die zugeordneten Profilkoordinaten 102 werden in dem sechsten Werkzeugeinstellschritt 64 in der Speichereinheit 32 des Werkzeugeinstell- und Werkzeugmessgeräts 24 abgespeichert. In einem weiteren Verfahrensschritt 112 wird das sechste Profilbearbeitungswerkzeug 54 aus der Spindeleinheit 96 entnommen und das siebte Profilbearbeitungswerkzeug 56 des Satzes von Profilbearbeitungswerkzeugen 18 in die Spindeleinheit 96 eingesetzt.

In einem, insbesondere zeitlich nach dem sechsten Werkzeugmessschritt 44 stattfindenden, siebten Werkzeugmessschritt 46 wird die Arbeitskontur 28 des siebten Profilbearbeitungswerkzeugs 56 des Satzes von Profilbearbeitungswerkzeugen 18 erfasst und/oder vermessen. In einem siebten Werkzeugeinstellschritt 66 werden der in dem siebten Werkzeugmessschritt 46 erfassten Arbeitskontur 28 des siebten Profilbearbeitungswerkzeugs 56 Profilkoordinaten 102 zugeordnet. Die in dem siebten Werkzeugmessschritt 46 ermittelten Profilkoordinaten 102 des siebten Profilbearbeitungswerkzeugs 56 werden in dem siebten Werkzeugeinstellschritt 66 auf die zuvor in dem ersten Werkzeugmessschritt 26 ermittelten Profilkoordinaten 102 des ersten Profilbearbeitungswerkzeugs 10 abgestimmt. In dem siebten Werkzeugeinstellschritt 66 werden die Profilkoordinaten 102 der Arbeitskontur 28 des ersten Profilbearbeitungswerkzeugs 10 als Referenzkoordinaten für eine relative Positionierung von Profilkoordinaten 102 der erfassten und/oder vermessenen Arbeitskontur 28 des siebten Profilbearbeitungswerkzeugs 56 eingegeben. Die zugeordneten Profilkoordinaten 102 werden in dem siebten Werkzeugeinstellschritt 66 in der Speichereinheit 32 des Werkzeugeinstell- und Werkzeugmessgeräts 24 abgespeichert. Die in den Werkzeugeinstellschritten 30, 36, 58, 60, 62, 64, 66 abgespeicherten Profilkoordinaten 102 werden mit Koordinaten der zu bearbeitenden Seitenkante 20 der Steinplatte 22 überlagert (vgl. auch die Figuren 6a bis 6c).

Bei dem kombinierten Vermessen und Einstellen der Mehrzahl an einzelnen Profilbearbeitungswerkzeugen 10, 12, 48, 50, 52, 54, 56 des Satzes von Profilbearbeitungswerkzeugen 18 wird in dem vierten Werkzeugmessschritt 40 ein Profilfräswerkzeug 14, insbesondere ein Profilierrad, und in dem auf diesen vierten Werkzeugmessschritt 40 nachfolgenden fünften Werkzeugmessschritt 42 ein Profilpolierwerkzeug 16, insbesondere ein Profilpolierrad, optisch vermessen. In dem, dem fünften Werkzeugmessschritt 42, in dem das Profilpolierwerkzeug 16 vermessen wurde, nachfolgenden und zu dem in dem Werkzeugmessschritt 42 vermessenen Profilpolierwerkzeug 16 zugehörigen Werkzeugeinstellschritt 62 werden die ermittelten Profilkoordinaten 112‴ des Profilpolierwerkzeugs 16 auf die zuvor in dem ersten Werkzeugmessschritt 26 ermittelten Profilkoordinaten 112 des ersten Profilbearbeitungswerkzeugs 10, welches als Profilfräswerkzeug 14 ausgebildet ist, abgestimmt (siehe auch Fig. 6c).

In zumindest einem weiteren Verfahrensschritt 114 werden die in den Werkzeugmessschritten 26, 34, 38, 40, 42, 44, 46 ermittelten Profilkoordinaten 102 der einzelnen Profilbearbeitungswerkzeuge 10, 12, 48, 50, 52, 54, 56 des Satzes von Profilbearbeitungswerkzeugen 18, die in den Werkzeugeinstellschritten 30, 36, 58, 60, 62, 64, 66 abgespeichert wurden, möglichst exakt zueinander überlagert. In diesem Fall übernimmt die Werkzeugmaschine 74 bei einer anschließenden Bearbeitung der Steinplatte 22 die Überwachung des durch jedes Profilfräswerkzeug 14 des Satzes von Profilbearbeitungswerkzeugen 18 vorgenommenen Materialabtrags und/oder die Überwachung des durch jedes Profilpolierwerkzeug 16 des Satzes von Profilbearbeitungswerkzeugen 18 vorgenommenen Polierdrucks.

In zumindest einem (zu dem Verfahrensschritt 114 alternativen) weiteren Verfahrensschritt 116 werden die in den Werkzeugmessschritten 26, 34, 38, 40, 42, 44, 46 ermittelten Profilkoordinaten 102 der einzelnen Profilbearbeitungswerkzeuge 10, 12, 48, 50, 52, 54, 56 des Satzes von Profilbearbeitungswerkzeugen 18, die in den Werkzeugeinstellschritten 30, 36, 58, 60, 62, 64, 66 abgespeichert wurden, mit einem Offset 68 überlagert (vgl. auch Figuren 6a bis 6c), wobei der Offset 68 eine relative Verschiebung der in den jeweiligen Werkzeugeinstellschritten 30, 36, 58, 60, 62, 64, 66 abgespeicherten Profilkoordinaten 102 zu den Profilkoordinaten 102 des, insbesondere direkt, zuvor vermessenen Profilbearbeitungswerkzeugs 12, 48, 50, 52, 54, 56 angibt oder wobei der Offset 68 eine relative Verschiebung der in den jeweiligen Werkzeugeinstellschritten 30, 36, 58, 60, 62, 64, 66 abgespeicherten Profilkoordinaten 102 zu den Profilkoordinaten 102 des ersten Profilbearbeitungswerkzeugs 10 angibt. Vorzugsweise wird in den zweiten bis siebten Werkzeugeinstellschritten 36, 58, 60, 62, 64, 66 jeweils direkt der Offset 68 berechnet und/oder auf die jeweils neu abgespeicherten Profilkoordinaten 102 angewandt. Alternativ könnte der Offset 68 auch erst nach Durchführung aller Werkzeugmessschritte 26, 34, 38, 40, 42, 44, 46 auf die abgespeicherten Profilkoordinaten 102 angewandt werden.

In zumindest einem Ausgabeschritt 72 werden die ermittelten und aufeinander abgestimmten Profilkoordinaten 102 in einer maschinenlesbaren Form an die Werkzeugmaschine 74 übertragen. Ein Offset 68, welcher einem der Profilfräswerkzeuge 14 des Satzes von Profilbearbeitungswerkzeugen 18 zugeordnet wurde, bewirkt dabei, dass ein Datensatz der Profilfräswerkzeuge 14, der an die Werkzeugmaschine 74 übertragen wird, ein virtuell vergrößertes Profilfräswerkzeug 14 enthält. Dadurch kann vorteilhaft erreicht werden, dass die verschiedenen Profilfräswerkzeuge 14 bei identischer Werkzeugmaschineneinstellung automatisch nicht bis ganz zur gewünschten Kantenendposition gefahren werden, sondern jeweils einen Materialrest übrig lassen, welcher dann von dem nächsten Profilfräswerkzeug 14 des Satzes von Profilbearbeitungswerkzeugen 18 teilweise oder ganz entfernt wird. Lediglich der Datensatz des letzten (feinsten) Profilfräswerkzeugs 14 ist frei von einem Offset und fährt somit bis an die gewünschte Kantenposition heran, lässt also kein über die gewünschte Kantenposition herausstehendes Material übrig. Ein Offset 68, welcher einem der Profilpolierwerkzeuge 16 des Satzes von Profilbearbeitungswerkzeugen 18 zugeordnet wurde, bewirkt dabei, dass ein Datensatz des Profilpolierwerkzeugs 16, der an die Werkzeugmaschine 74 übertragen wird, ein virtuell verkleinertes Profilpolierwerkzeug 16 enthält. Dadurch kann vorteilhaft erreicht werden, dass die verschiedenen Profilpolierwerkzeuge 16 bei identischer Werkzeugmaschineneinstellung automatisch verschieden starke Polierdrücke ausüben. In zumindest einem weiteren erfindungsgemäßen Verfahrensschritt 120 wird die Steinplatte 22 sukzessive mittels der Profilbearbeitungswerkzeuge 10, 12, 48, 50, 52, 54, 56 bearbeitet. Dabei wird eine der beiden folgenden Bearbeitungsreihenfolgen eingehalten. Entweder: viertes Profilbearbeitungswerkzeug 50, drittes Profilbearbeitungswerkzeug 48, zweites Profilbearbeitungswerkzeug 12, erstes Profilbearbeitungswerkzeug 10, fünftes Profilbearbeitungswerkzeug 52, sechstes Profilbearbeitungswerkzeug 54, siebtes Profilbearbeitungswerkzeug 56 oder: viertes Profilbearbeitungswerkzeug 50, drittes Profilbearbeitungswerkzeug 48, zweites Profilbearbeitungswerkzeug 12, erstes Profilbearbeitungswerkzeug 10, siebtes Profilbearbeitungswerkzeug 56, sechstes Profilbearbeitungswerkzeug 54, fünftes Profilbearbeitungswerkzeug 52. Ein Satz von Profilbearbeitungswerkzeugen 18 kann auch beliebige von Eins und von Sieben verschiedene Anzahlen von Profilbearbeitungswerkzeugen aufweisen.

Die Fig. 6a bis 6c zeigen beispielhaft jeweils anhand von ermittelten Arbeitskonturen 28 bestimmte Profilkoordinaten 102, 102', 102", 102‴ von Profilbearbeitungswerkzeugen 10, 12, 48, 52. Die Profilkoordinaten 102, 102', 102", 102‴ sind jeweils mit einer Kontur bzw. mit Koordinaten der zu bearbeitenden Steinplatte 22 überlagert. Die Profilkoordinaten 102, 102', 102", 102‴ sind jeweils automatisch relativ zu der zu bearbeitenden Steinplatte 22, insbesondere zu den Koordinaten der zu bearbeitenden Steinplatte 22, ausgerichtet. Zu der Ausrichtung der Profilkoordinaten 102, 102', 102", 102‴ relativ zu der Steinplatte 22 wird jeweils ein Punkt der Arbeitskontur 28 des in dem ersten Werkzeugmessschritt 26 vermessenen Profilbearbeitungswerkzeugs 10 ermittelt, an dem die Arbeitskontur 28 einen maximalen Krümmungsradius annimmt. Dadurch kann vorteilhaft erreicht werden, dass die zumindest teilweise und/oder abschnittsweise konkaven Arbeitskonturen 28 bei einer Bearbeitung der Steinplatte 22 durch aufeinanderfolgende Profilbearbeitungswerkzeuge 10, 12, 48, 50, 52, 54, 56 möglichst exakt relativ zueinander ausgerichtet sind (d.h. sich abgesehen von dem Offset 68 überlagern).

Die Profilkoordinaten 102 des ersten Profilbearbeitungswerkzeugs 10, d.h. des Profilfräswerkzeugs 14 mit der feinsten Körnung, welche in allen drei Figuren 6a bis 6c gezeigt ist, geben die gewünschte Kantenposition an. In der Fig. 6a sind zudem die (um den Offset 68 verschobenen) Profilkoordinaten 102' des zweiten Profilbearbeitungswerkzeugs 12, d.h. des Profilfräswerkzeugs 14 mit der zweitfeinsten Körnung, gezeigt. Der Versatz zwischen den Profilkoordinaten 102 des ersten Profilbearbeitungswerkzeugs 10 und den Profilkoordinaten 102' des zweiten Profilbearbeitungswerkzeugs 12 ist durch den Offset 68 gegeben. Der Offset 68 bewirkt eine Verschiebung der Profilkoordinaten 102' in eine Richtung parallel zu einer Haupterstreckungsebene 70 der zu bearbeitenden Steinplatte 22.

In dem in Fig. 6a dargestellten Fall ist der Offset 68 eines Profilfräswerkzeugs 14 gezeigt. Der einem als Profilfräswerkzeug 14 ausgebildeten Profilbearbeitungswerkzeug 12, 48, 50 des Satzes von Profilbearbeitungswerkzeugen 18 zugeordnete Offset 68 entspricht einem (z.B. durch den Hersteller) vorgegebenen idealen Materialabtragwert dieses Profilbearbeitungswerkzeugs 12, 48, 50, insbesondere dieses Profilfräswerkzeugs 14. Ideale Materialabtragwerte von Profilfräswerkzeugen 14 liegen in der Regel zwischen 0,5 mm und 2 mm, vorzugsweise etwa 1 mm. Die Profilkoordinaten 102' des zweiten Profilbearbeitungswerkzeugs 12 sind somit (virtuell) um einem dem idealen Materialabtragwert des zweiten Profilbearbeitungswerkzeugs 12 entsprechenden Betrag verschoben. Dies ist insbesondere äquivalent zu einer virtuellen Vergrößerung des zweiten Profilbearbeitungswerkzeugs 12, d.h. einer Vergrößerung der Messwerte des zweiten Profilbearbeitungswerkzeugs 12 um den Offset 68 in Richtung der Haupterstreckungsebene 70 der Steinplatte 22 bzw. in X-Koordinatenrichtung 118. Die Differenz aus den Profilkoordinaten 102, 102' des ersten Profilbearbeitungswerkzeugs 10 und des zweiten Profilbearbeitungswerkzeugs 12 entspricht somit etwa einem Materialbereich der Steinplatte 22, welcher nach einer Bearbeitung der Steinplatte 22 mit dem zweiten Profilbearbeitungswerkzeug 12 (und zuvor mit dem dritten und vierten Profilbearbeitungswerkzeug 48, 50) stehen geblieben ist und welcher durch das erste Profilbearbeitungswerkzeug 10 noch abgetragen werden muss.

In dem in Fig. 6b dargestellten Fall ist der Offset 68 eines anderen Profilfräswerkzeugs 14 des Satzes von Profilbearbeitungswerkzeugen 18, genauer des dritten Profilbearbeitungswerkzeugs 48, gezeigt. Die Profilkoordinaten 102" des dritten Profilbearbeitungswerkzeugs 48 sind (virtuell) um einen Betrag einer Summe des idealen Materialabtragwerts des zweiten Profilbearbeitungswerkzeugs 12 und des idealen Materialabtragwerts des dritten Profilbearbeitungswerkzeugs 48 verschoben. Dies ist insbesondere äquivalent zu einer virtuellen Vergrößerung des dritten Profilbearbeitungswerkzeugs 48 in X-Koordinatenrichtung 118, welche noch größer ist als die virtuelle Vergrößerung des zweiten Profilbearbeitungswerkzeugs 12. Die Differenz aus den Profilkoordinaten 102', 102" des zweiten Profilbearbeitungswerkzeugs 12 und des dritten Profilbearbeitungswerkzeugs 48 entspricht somit etwa einem Materialbereich der Steinplatte 22, welcher nach einer Bearbeitung der Steinplatte 22 mit dem dritten Profilbearbeitungswerkzeug 48 (und zuvor mit dem vierten Profilbearbeitungswerkzeug 50) stehen geblieben ist und welcher durch das erste Profilbearbeitungswerkzeug 10 und durch das zweite Profilbearbeitungswerkzeug 12 noch abgetragen werden muss.

In dem in Fig. 6c dargestellten Fall ist der Offset 68 eines Profilpolierwerkzeugs 16 des Satzes von Profilbearbeitungswerkzeugen 18, genauer des fünften Profilbearbeitungswerkzeugs 52, gezeigt. Der einem Profilpolierwerkzeug 16 zugeordnete Offset 68 weist eine entgegengesetzte Richtung auf wie der einem Profilfräswerkzeug 14 zugeordnete Offset 68. Die Profilkoordinaten 102‴ des fünften Profilbearbeitungswerkzeugs 52 sind (virtuell) entgegen der X-Koordinatenrichtung 118 verschoben. Dies ist insbesondere äquivalent zu einer virtuellen Verkleinerung des fünften Profilbearbeitungswerkzeugs 52 in der X-Koordinatenrichtung 118. Diese virtuelle Verkleinerung führt zu einem Anpressen des Profilpolierwerkzeugs 16 an die Steinplatte 22. Die Differenz aus den Profilkoordinaten 102, 102‴ des ersten Profilbearbeitungswerkzeugs 12 und des fünften Profilbearbeitungswerkzeugs 52 entspricht somit etwa einer Kompression, welche ein Poliermaterial des Profilpolierwerkzeugs 16 durch das Anpressen an die Steinplatte 22 erfährt.

### Bezugszeichen

- 10: Erstes Profilbearbeitungswerkzeug
- 12: Zweites Profilbearbeitungswerkzeug
- 14: Profilfräswerkzeug
- 16: Profilpolierwerkzeug
- 18: Satz von Profilbearbeitungswerkzeugen
- 20: Seitenkante
- 22: Steinplatte
- 24: Werkzeugeinstell- und Werkzeugmessgerät
- 26: Erster Werkzeugmessschritt
- 28: Arbeitskontur
- 30: Erster Werkzeugeinstellschritt
- 32: Speichereinheit
- 34: Zweiter Werkzeugmessschritt
- 36: Zweiter Werkzeugeinstellschritt
- 38: Dritter Werkzeugmessschritt
- 40: Vierter Werkzeugmessschritt
- 42: Fünfter Werkzeugmessschritt
- 44: Sechster Werkzeugmessschritt
- 46: Siebter Werkzeugmessschritt
- 48: Drittes Profilbearbeitungswerkzeug
- 50: Viertes Profilbearbeitungswerkzeug
- 52: Fünftes Profilbearbeitungswerkzeug
- 54: Sechstes Profilbearbeitungswerkzeug
- 56: Siebtes Profilbearbeitungswerkzeug
- 58: Dritter Werkzeugeinstellschritt
- 60: Vierter Werkzeugeinstellschritt
- 62: Fünfter Werkzeugeinstellschritt
- 64: Sechter Werkzeugeinstellschritt
- 66: Siebter Werkzeugeinstellschritt
- 68: Offset
- 70: Haupterstreckungsebene
- 72: Ausgabeschritt
- 74: Werkzeugmaschine
- 76: Optische Messeinrichtung
- 78: Kamera
- 80: Beleuchtung
- 82: Polieroberfläche
- 84: Bearbeitungsoberfläche
- 86: Kantenform
- 88: Haltevorrichtung
- 90: Steuer- und/oder Regeleinheit
- 92: Prozessor
- 94: Verfahrensschritt
- 96: Spindeleinheit
- 98: Werkzeugaufnahmebereich
- 100: Verfahrensschritt
- 102: Profilkoordinaten
- 104: Verfahrensschritt
- 106: Verfahrensschritt
- 108: Verfahrensschritt
- 110: Verfahrensschritt
- 112: Verfahrensschritt
- 114: Verfahrensschritt
- 116: Verfahrensschritt
- 118: X-Koordinatenrichtung
- 120: Verfahrensschritt
- 122: Rotationsachse

## Patentansprüche

1. Optisches Mess- und Einstellverfahren zu einem kombinierten Vermessen und Einstellen eines eine Mehrzahl an einzelnen Profilbearbeitungswerkzeugen (10, 12, 48, 50, 52, 54, 56) aufweisenden Satzes von Profilbearbeitungswerkzeugen (18), wobei die einzelnen Profilbearbeitungswerkzeuge (10, 12, 48, 50, 52, 54, 56) des Satzes von Profilbearbeitungswerkzeugen (18) als Profilierräder und/oder Profilpolierräder ausgebildet sind und zu einer sukzessiven Bearbeitung von Seitenkanten (20) von Steinplatten (22) vorgesehen sind, mit zumindest einem Werkzeugeinstell- und Werkzeugmessgerät (24), mittels dessen in zumindest einem ersten Werkzeugmessschritt (26) eine zumindest teilweise und/oder zumindest abschnittsweise konkav gekrümmte Arbeitskontur (28), insbesondere Fräskontur oder Polierkontur, eines ersten Profilbearbeitungswerkzeugs (10) des Satzes von Profilbearbeitungswerkzeugen (18) mittels einer, eine Kamera (78) und eine Beleuchtung (80) umfassenden optischen Messeinrichtung (76) des Werkzeugeinstell- und/oder Werkzeugmessgeräts (24) zumindest teilautomatisiert optisch erfasst wird, wobei der in dem ersten Werkzeugmessschritt (26) erfassten Arbeitskontur (28) des ersten Profilbearbeitungswerkzeugs (10) in einem ersten Werkzeugeinstellschritt (30) Profilkoordinaten (102) zugeordnet werden, welche in einer Speichereinheit (32) des Werkzeugeinstell- und Werkzeugmessgeräts (24) abgespeichert werden, wobei in zumindest
einem zweiten Werkzeugmessschritt (34) eine zumindest teilweise und/oder zumindest abschnittsweise konkave Arbeitskontur (28), insbesondere Fräskontur oder Polierkontur, eines zweiten Profilbearbeitungswerkzeugs (12) des Satzes von Profilbearbeitungswerkzeugen (18) zumindest mittels der optischen Messeinrichtung (76) teilautomatisiert optisch erfasst wird, wobei die in dem zweiten Werkzeugmessschritt (34) ermittelten Profilkoordinaten (102) des zweiten Profilbearbeitungswerkzeugs (12) in zumindest einem zweiten Werkzeugeinstellschritt (36) auf die zuvor in dem ersten Werkzeugmessschritt (26) ermittelten Profilkoordinaten (102) des ersten Profilbearbeitungswerkzeugs (10) abgestimmt werden, wobei in dem zweiten Werkzeugeinstellschritt (36) die Profilkoordinaten (102) der Arbeitskontur (28) des ersten Profilbearbeitungswerkzeugs (10) als Referenzkoordinaten für eine relative Positionierung von Profilkoordinaten (102) der erfassten Arbeitskontur (28) des zweiten Profilbearbeitungswerkzeugs (12) eingegeben werden und in der Speichereinheit (32) des Werkzeugeinstell- und Werkzeugmessgeräts (24) abgespeichert werden und wobei die Profildaten dazu vorgesehen sind, an eine Werkzeugmaschine (74) ausgegeben zu werden, welche basierend auf den Profildaten die Steinplatte (22) mit den Profilbearbeitungswerkzeugen (10, 12, 48, 50, 52, 54, 56) sukzessive bearbeitet.

2. Mess- und Einstellverfahren nach Anspruch 1, **gekennzeichnet durch** zumindest eine Mehrzahl, insbesondere zumindest fünf, weitere Werkzeugmessschritte (38, 40, 42, 44, 46), in welchen zumindest teilweise konkave und/oder zumindest abschnittsweise konkave Arbeitskonturen (28), insbesondere Fräskonturen oder Polierkonturen, einer Mehrzahl von weiteren, insbesondere zumindest fünf weiteren, Profilbearbeitungswerkzeugen (48, 50, 52, 54, 56) des Satzes von Profilbearbeitungswerkzeugen (18) zumindest teilautomatisiert optisch erfasst werden, wobei in jedem der weiteren Werkzeugmessschritte (38, 40, 42, 44, 46) die darin ermittelten Profilkoordinaten (102) der weiteren Profilbearbeitungswerkzeuge (48, 50, 52, 54, 56) jeweils in zumindest einem zugehörigen weiteren Werkzeugeinstellschritt (58, 60, 62, 64, 66) auf die in dem vorangehenden Werkzeugmessschritt (38, 40, 42, 44, 46) ermittelten Profilkoordinaten (102) eines der zuvor vermessenen weiteren Profilbearbeitungswerkzeuge (48, 50, 52, 54, 56) abgestimmt werden.

3. Mess- und Einstellverfahren nach einem der vorhergehenden Ansprüche, **dadurch gekennzeichnet, dass** bei dem kombinierten Vermessen und Einstellen der Mehrzahl an einzelnen Profilbearbeitungswerkzeugen (10, 12, 48, 50, 52, 54, 56) des Satzes von Profilbearbeitungswerkzeugen (18) in zumindest einem Werkzeugmessschritt (40) ein Profilfräswerkzeug (14), insbesondere ein Profilierrad, und in zumindest einem auf diesen Werkzeugmessschritt (40) folgenden Werkzeugmessschritt (42) ein Profilpolierrad optisch vermessen wird.

4. Mess- und Einstellverfahren nach einem der vorhergehenden Ansprüche, **dadurch gekennzeichnet, dass** bei dem kombinierten Vermessen und Einstellen der Mehrzahl an einzelnen Profilbe-arbeitungswerkzeugen (10, 12, 48, 50, 52, 54, 56) des Satzes von Profilbearbeitungswerkzeugen (18) in zumindest einem Werkzeugmess-schritt (40) ein Profilfräswerkzeug (14), insbesondere ein Profilierrad, und in zumindest einem auf diesen Werkzeugmessschritt (40) folgenden Werkzeugmessschritt (42) ein Profilpolierrad optisch vermessen wird, und dass in einem auf den Werkzeugmessschritt (42), in dem das Profilpolierrad vermessen wurde, folgenden und zu dem in dem Werkzeugmessschritt (42) vermessenen Profilpolierrad zugehörigen Werkzeugeinstellschritt (62) die ermittelten Profilkoordinaten (102) des Profilpolierrads auf die zuvor in dem ersten Werkzeugmessschritt (26) ermittelten Profilko-ordinaten des ersten Profilbearbeitungswerkzeugs (10), welches als Profilfräswerkzeug (14) ausgebildet ist, abgestimmt werden.

5. Mess- und Einstellverfahren nach einem der vorhergehenden Ansprüche, wobei zumindest eine Mehrzahl der zu vermessenden Profilbearbeitungswerkzeuge (10, 12, 48, 50) des Satzes von Profilbearbeitungswerkzeugen (18) Profilierräder, **dadurch gekennzeichnet, dass** in dem ersten an einem Profilierrad vorgenommenen Werkzeugmessschritt (26) des kombinierten Vermessens und Einstellens der Mehrzahl an einzelnen Profilbearbeitungswerkzeugen (10, 12, 48, 50) des Satzes von Profilbearbeitungswerkzeugen (18) das Profilierrad des Satzes von Profilbearbeitungswerkzeugen (18) mit der am wenigsten groben Bearbeitungsoberfläche (84) vermessen wird, und dass die in den darauf folgenden Werkzeugmessschritten (34, 38, 40) zu vermessenden Profilierrad , aufsteigend nach einer Grobheit der Bearbeitungsoberfläche (84) der Profilierräder sortiert werden.

6. Mess- und Einstellverfahren nach einem der vorhergehenden Ansprüche, wobei zumindest eine Mehrzahl der zu vermessenden Profilbearbeitungswerkzeuge (52, 54, 56) des Satzes von Profilbearbeitungswerkzeugen (18) Profilpolierräder sind, und wobei zumindest eine Mehrzahl der zu vermessenden Profilbearbeitungswerkzeuge (10, 12, 48, 50) des Satzes von Profilbearbeitungswerkzeugen (18) Profilierräder sind, **dadurch gekennzeichnet, dass** zuerst zumindest eines der Profilierräder des Satzes von Profilbearbeitungswerkzeugen (18) vermessen und eingestellt wird, bevor ein oder mehrere Profilpolierräder des Satzes von Profilbearbeitungswerkzeugen (18) vermessen und eingestellt werden.

7. Mess- und Einstellverfahren nach einem der vorhergehenden Ansprüche, wobei zumindest eine Mehrzahl der zu vermessenden Profilbearbeitungswerkzeuge (52, 54, 56) des Satzes von Profilbearbeitungswerkzeugen (18) Profilpolierräder sind, **dadurch gekennzeichnet, dass** die in Werkzeugmessschritten (42, 44, 46) an Profilpolierräder des Satzes von Profilbearbeitungswerkzeugen (18) ermittelten Profilkoordinaten (102) jeweils auf die ermittelten Profilkoordinaten (102) des Profilierräder des Satzes von Profilbearbeitungswerkzeugen (18) mit der feinsten Bearbeitungsoberfläche (84) abgestimmt werden.

8. Mess- und Einstellverfahren nach einem der vorhergehenden Ansprüche, **dadurch gekennzeichnet, dass** die in den Werkzeugeinstellschritten (30, 36, 58, 60, 62, 64, 66) abgespeicherten Profilkoordinaten (102) mit Koordinaten einer zu bearbeitenden Seitenkante (20) einer Steinplatte (22) überlagert werden.

9. Mess- und Einstellverfahren nach Anspruch 8, **dadurch gekennzeichnet, dass** die in den Werkzeugmessschritten (26, 34, 38, 40, 42, 44, 46) ermittelten Profilkoordinaten (102) der einzelnen Profilbearbeitungswerkzeuge (10, 12, 48, 50, 52, 54, 56) des Satzes von Profilbearbeitungswerkzeugen (18) in den Werkzeugeinstellschritten (30, 36, 58, 60, 62, 64, 66) möglichst exakt überlagert werden.

10. Mess- und Einstellverfahren nach Anspruch 8, **dadurch gekennzeichnet, dass** die in den Werkzeugmessschritten (26, 34, 38, 40, 42, 44, 46) ermittelten Profilkoordinaten (102) der einzelnen Profilbearbeitungswerkzeuge (12, 48, 50, 52, 54, 56) des Satzes von Profilbearbeitungswerkzeugen (18) in den Werkzeugeinstellschritten (30, 36, 58, 60, 62, 64, 66) mit einem Offset (68) überlagert werden.

11. Mess- und Einstellverfahren nach Anspruch 10, **dadurch gekennzeichnet, dass** der Offset (68) eine Verschiebung der Profilkoordinaten (102) in eine Richtung parallel zu einer Haupterstreckungsebene (70) der zu bearbeitenden Steinplatte (22) bewirkt.

12. Mess- und Einstellverfahren nach Anspruch 10 oder 11, **dadurch gekennzeichnet, dass** ein, zumindest einem der als Profilierräder ausgebildeten Profilbearbeitungswerkzeuge (12, 48, 50) des Satzes von Profilbearbeitungswerkzeugen (18) zugeordneter Offset (68) relativ zu den ermittelten Profilkoordinaten (102) des zuvor vermessenen Profilierrads des Satzes von Profilbearbeitungswerkzeugen (18) eingestellt wird.

13. Mess- und Einstellverfahren nach einem der Ansprüche 10 bis 12,
**dadurch gekennzeichnet, dass** ein, zumindest einem der als Profilierräder ausgebildeten Profilbearbeitungswerkzeuge (12, 48, 50) des Satzes von Profilbearbeitungswerkzeugen (18) zugeordneter Offset (68) einem vorgegebenen idealen Materialabtragwert dieses Profilierrads entspricht.

14. Mess- und Einstellverfahren nach einem der Ansprüche 10 bis 13,
**dadurch gekennzeichnet, dass** ein, zumindest einem der Profilbearbeitungswerkzeuge (12, 48, 50, 52, 54, 56) des Satzes von Profilbearbeitungswerkzeugen (18) zugeordneter Offset (68) relativ zu den ermittelten Profilkoordinaten (102) des zuvor vermessenen Profilierrads aus dem Satz von Profilbearbeitungswerkzeugen (18), welches die feinste Bearbeitungsoberfläche (84) aller Profilierräder des Satzes von Profilbearbeitungswerkzeugen (18) aufweist, eingestellt wird.

15. Mess- und Einstellverfahren zumindest nach den Ansprüchen 10 und 14,
**dadurch gekennzeichnet, dass** zumindest ein, in einem Werkzeugeinstellschritt (36, 58, 60) einem Profilierrad zugeordneter Offset (68) eine entgegengesetzte Richtung aufweist wie ein in einem weiteren Werkzeugeinstellschritt (62, 64, 66) einem Profilpolierrad zugeordneter Offset (68).

16. Mess- und Einstellverfahren nach einem der vorhergehenden Ansprüche,
**dadurch gekennzeichnet, dass** in zumindest einem Ausgabeschritt (72) die ermittelten und aufeinander abgestimmten Profilkoordinaten (102) in einer maschinenlesbaren Form an eine Werkzeugmaschine (74) übertragen werden.

17. Mess- und Einstellverfahren zumindest nach den Ansprüchen 10 und 16, **dadurch gekennzeichnet, dass** ein, zumindest einem der Profilierräder des Satzes von Profilbearbeitungswerkzeugen (18) zugeordneter Offset (68) bewirkt, dass ein Datensatz mit einem virtuell vergrößerten Profilfräswerkzeug an die Werkzeugmaschine (74) übertragen wird.

18. Mess- und Einstellverfahren zumindest nach den Ansprüchen 14 und 16, **dadurch gekennzeichnet, dass** ein, zumindest einem der Profilpolierräder des Satzes von Profilbearbeitungswerkzeugen (18) zugeordneter Offset (68) bewirkt, dass ein Datensatz mit einem virtuell verkleinerten Profilpolierwerkzeug an die Werkzeugmaschine (74) übertragen wird.

19. Mess- und Einstellverfahren nach Anspruch 8, **dadurch gekennzeichnet, dass** zumindest die in dem ersten Werkzeugeinstellschritt (30) abgespeicherten Profilkoordinaten (102) automatisch relativ zu der zu bearbeitenden Steinplatte (22) ausgerichtet werden.

20. Mess- und Einstellverfahren nach Anspruch 19, **dadurch gekennzeichnet, dass** zu der Ausrichtung der Profilkoordinaten (102) relativ zu der Steinplatte (22) ein Punkt der Arbeitskontur (28) des in dem ersten Werkzeugmessschritt (26) vermessenen Profilbearbeitungswerkzeugs (10) ermittelt wird, an dem die Arbeitskontur (28) einen maximalen Krümmungsradius annimmt.

21. Mess- und Einstellverfahren nach einem der vorhergehenden Ansprüche,
**dadurch gekennzeichnet, dass** die Arbeitskonturen (28) der Profilbearbeitungswerkzeuge (10, 12, 48, 50, 52, 54, 56), insbesondere des ersten Profilbearbeitungswerkzeugs (10) und des zweiten Profilbearbeitungswerkzeugs (12) des Satzes von Profilbearbeitungswerkzeugen (18), eine gewünschte Kantenform (86) der zu bearbeitenden Steinplatte (22) nachbilden.

22. Optisches Werkzeugeinstell- und Werkzeugmessgerät (24) angepasst zur Durchführung des optischen Mess- und Einstellverfahrens nach einem der Ansprüche 1 bis 21, aufweisend eine optische Messeinrichtung (76) mit einer Kamera (78) und einer Beleuchtung (80).

## Claims

1. Optical measuring and presetting method for a combined measuring and presetting of a set of profile machining tools (18) comprising a plurality of individual profile machining tools (10, 12, 48, 50, 52, 54, 56),
wherein the individual profile machining tools (10, 12, 48, 50, 52, 54, 56) of the set of profile machining tools (18) are realized as profiling wheels and/or profile polishing wheels and are configured for a successive machining of side edges (20) of stone slabs (22),
with at least one tool presetting and tool measuring apparatus (24), by means of which in at least one first tool measuring step (26) an at least partly and/or at least section-wise concave-curved work contour (28), in particular milling contour or polishing contour, of a first profile machining tool (10) of the set of profile machining tools (18) is optically captured in an at least semi-automated manner by means of an optical measuring device (76), comprising a camera (78) and a lighting (80), of the tool presetting and/or tool measuring apparatus (24),
wherein in a first tool presetting step (30) profile coordinates (102) are assigned to the work contour (28) of the first profile machining tool (10) captured in the first tool measuring step (26), said profile coordinates (102) being stored in a memory unit (32) of the tool presetting and tool measuring apparatus (24),
wherein in at least one second tool measuring step (34) an at least partly and/or at least section-wise concave work contour (28), in particular milling contour or polishing contour, of a second profile machining tool (12) of the set of profile machining tools (18) is optically captured in an at least semi-automated manner at least by means of the optical measuring device (76),
wherein in at least one second tool presetting step (36) the profile coordinates (102) of the second profile machining tool (12) determined in the second tool measuring step (34) are aligned with the profile coordinates (102) of the first profile machining tool (10) which were previously determined in the first tool measuring step (26),
wherein in the second tool presetting step (36) the profile coordinates (102) of the work contour (28) of the first profile machining tool (10) are inputted as reference coordinates for a relative positioning of profile coordinates (102) of the captured work contour (28) of the second profile machining tool (12) and are stored in the memory unit (32) of the tool presetting and tool measuring apparatus (24), and wherein the profile data are configured to be outputted to a machine tool (74) which, on the basis of the profile data, machines the stone slab (22) successively with the profile machining tools (10, 12, 48, 50, 52, 54, 56).

2. Measuring and presetting method according to claim 1,
**characterised by** at least a plurality of, in particular at least five, further tool measuring steps (38, 40, 42, 44, 46), in which at least partly concave and/or at least section-wise concave work contours (28), in particular milling contours or polishing contours, of a plurality of further profile machining tools (48, 50, 52, 54, 56), in particular at least five further profile machining tools (48, 50, 52, 54, 56), of the set of profile machining tools (18) are optically captured in an at least semi-automated manner,
wherein in each of the further tool measuring steps (38, 40, 42, 44, 46) the profile coordinates (102) of the further profile machining tools (48, 50, 52, 54, 56) determined therein are, in each case in at least one allocated further tool presetting step (58, 60, 62, 64, 66), aligned with the profile coordinates (102) of one of the previously measured further profile machining tools (48, 50, 52, 54, 56), which were determined in the preceding tool measuring step (38, 40, 42, 44, 46).

3. Measuring and presetting method according to one of the preceding claims,
**characterised in that** in the combined measuring and presetting of the plurality of individual profile machining tools (10, 12, 48, 50, 52, 54, 56) of the set of profile machining tools (18), in at least one tool measuring step (40) a profile milling tool (14), in particular a profiling wheel, is optically measured, and in at least one tool measuring step (42) following said tool measuring step (40), a profile polishing wheel is optically measured.

4. Measuring and presetting method according to one of the preceding claims,
**characterised in that** in the combined measuring and presetting of the plurality of individual profile machining tools (10, 12, 48, 50, 52, 54, 56) of the set of profile machining tools (18), in at least one tool measuring step (40) a profile milling tool (14), in particular a profiling wheel, is optically measured, and in at least one tool measuring step (42) following said tool measuring step (40), a profile polishing wheel is optically measured,
and that in a tool presetting step (62), following the tool measuring step (42) in which the profile polishing wheel was measured and allocated to the profile polishing wheel measured in the tool measuring step (42), the determined profile coordinates (102) of the profile polishing wheel are aligned with the profile coordinates of the first profile machining tool (10) embodied as a profile milling tool (14), which were previously determined in the first tool measuring step (26).

5. Measuring and presetting method according to one of the preceding claims,
wherein at least a plurality of the profile machining tools (10, 12, 48, 50) which are to be measured, of the set of profile machining tools (18), are profiling wheels,
**characterised in that** in the first tool measuring step (26) of the combined measuring and presetting of the plurality of individual profile machining tools (10, 12, 48, 50) of the set of profile machining tools (18), which is executed on a profiling wheel, the profiling wheel of the set of profile machining tools (18) is measured which has the least coarse machining surface (84),
and that the profiling wheels that are to be measured in the following tool measuring steps (34, 38, 40) are sorted in ascending order by a coarseness of the machining surfaces (84) of the profiling wheels.

6. Measuring and presetting method according to one of the preceding claims,
wherein at least a plurality of the profile machining tools (52, 54, 56) which are to be measured, of the set of profile machining tools (18), are profile polishing wheels, and wherein
at least a plurality of the profile machining tools (10, 12, 48, 50) which are to be measured, of the set of profile machining tools (18), are profiling wheels,
**characterised in that** first at least one of the profiling wheels of the set of profile machining tools (18) is measured and preset before one or several profile polishing wheels of the set of profile machining tools (18) is/are measured and preset.

7. Measuring and presetting method according to one of the preceding claims,
wherein at least a plurality of the profile machining tools (52, 54, 56) which are to be measured, of the set of profile machining tools (18), are profile polishing wheels,
**characterised in that** the profile coordinates (102) determined in tool measuring steps (42, 44, 46) on profile polishing wheels of the set of profile machining tools (18) are in each case aligned with the determined profile coordinates (102) of the profiling wheel of the set of profile machining tools (18) which has the finest machining surface (84).

8. Measuring and presetting method according to one of the preceding claims,
**characterised in that** the profile coordinates (102) stored in the tool presetting steps (30, 36, 58, 60, 62, 64, 66) are overlaid with coordinates of a side edge (20) of a stone slab (22), which is to be machined.

9. Measuring and presetting method according to claim 8,
**characterised in that** the profile coordinates (102) of the individual profile machining tools (10, 12, 48, 50, 52, 54, 56) of the set of profile machining tools (18), which were determined in the tool measuring steps (26, 34, 38, 40, 42, 44, 46), are overlaid as precisely as possible in the tool presetting steps (30, 36, 58, 60, 62, 64, 66).

10. Measuring and presetting method according to claim 8,
**characterised in that** the profile coordinates (102) of the individual profile machining tools (12, 48, 50, 52, 54, 56) of the set of profile machining tools (18), which were determined in the tool measuring steps (26, 34, 38, 40, 42, 44, 46), are overlaid with an offset (68) in the tool presetting steps (30, 36, 58, 60, 62, 64, 66).

11. Measuring and presetting method according to claim 10,
**characterised in that** the offset (68) induces a displacement of the profile coordinates (102) in a direction that is parallel to a main extension plane (70) of the stone slab (22) which is to be machined.

12. Measuring and presetting method according to claim 10 or 11,
**characterised in that** an offset (68) assigned to at least one of the profile machining tools (12, 48, 50) embodied as profiling wheels, of the set of machining tools (18), is adjusted relative to the determined profile coordinates (102) of the profiling wheel of the set of profile machining tools (18), which was measured previously.

13. Measuring and presetting method according to one of claims 10 to 12,
**characterised in that** an offset (68) assigned to at least one of the profile machining tools (12, 48, 50) embodied as profiling wheels, of the set of profile machining tools (18), corresponds to a given ideal stock removal value of this profiling wheel.

14. Measuring and presetting method according to one of claims 10 to 13,
**characterised in that** an offset (68) assigned to at least one of the profile machining tools (12, 48, 50, 52, 54, 56) of the set of profile machining tools (18) is adjusted relative to the determined profile coordinates (102) of the previously measured profiling wheel of the set of profile machining tools (18), which has the finest machining surface (84) of all profiling wheels of the set of profile machining tools (18).

15. Measuring and presetting method at least according to claims 10 and 14,
**characterised in that** at least one offset (68) assigned to a profiling wheel in a tool presetting step (36, 58, 60) has a direction that is opposed to an offset (68) assigned to a profile polishing wheel in a further tool presetting step (62, 64, 66).

16. Measuring and presetting method according to one of the preceding claims,
**characterised in that** in at least one output step (72) the determined and respectively aligned profile coordinates (102) are transmitted to a machine tool (74) in a machine-readable form.

17. Measuring and presetting method at least according to claims 10 and 16,
**characterised in that** an offset (68) assigned to at least one of the profiling wheels of the set of profile machining tools (18) causes a dataset with a virtually enlarged profile milling tool being transmitted to the machine tool (74).

18. Measuring and presetting method at least according to claims 14 and 16,
**characterised in that** an offset (68) assigned to at least one of the profile polishing wheels of the set of profile machining tools (18) causes a dataset with a virtually downscaled profile polishing tool being transmitted to the machine tool (74).

19. Measuring and presetting method according to claim 8,
**characterised in that** at least the profile coordinates (102) stored in the first tool presetting step (30) are automatically aligned relative to the stone slab (22) that is to be machined.

20. Measuring and presetting method according to claim 19,
**characterised in that** for the alignment of the profile coordinates (102) relative to the stone slab (22), a point of the work contour (28) of the profile machining tool (10) measured in the first tool measuring step (26) is identified, in which the work contour (28) takes on a maximum curvature radius.

21. Measuring and presetting method according to one of the preceding claims,
**characterised in that** the work contours (28) of the profile machining tools (10, 12, 48, 50, 52, 54, 56), in particular of the first profile machining tool (10) and of the second profile machining tool (12), of the set of profile machining tools (18) emulate a desired edge shape (86) of the stone slab (22) that is to be machined.

22. Optical tool presetting and tool measuring apparatus (24),
adapted for an execution of the optical measuring and presetting method according to one of claims 1 to 21,
and comprising an optical measuring device (76) with a camera (78) and a lighting (80).

## Revendications

1. Procédé optique de mesure et d'ajustage pour la mesure et l'ajustage combinés d'un jeu d'outils à usinage-profilés (18) comprenant une pluralité d'outils à usinage-profilés individuels (10, 12, 48, 50, 52, 54, 56),
où les outils à usinage-profilés individuels (10, 12, 48, 50, 52, 54, 56) du jeu d'outils à usinage-profilés (18) sont réalisés comme roues à profiler et/ou roues polissage-profilé et sont conçus pour l'usinage successif de bords latéraux (20) de plaques en pierre (22),
avec au moins un appareil d'ajustage d'outil et de mesure d'outil (24) par le biais duquel dans au moins une première étape de mesure d'outil (26) un contour-travail (28), en particulier un contour-fraisage ou contour-polissage, d'un premier outil à usinage-profilés (10) du jeu d'outils à usinage-profilés (18) - ledit contour-travail (28) étant courbé en concave au moins partiellement et/ou au moins par sections - est optiquement détecté de façon au moins semi-automatisée par un dispositif de mesure optique (76) de l'appareil d'ajustage d'outil et de mesure d'outil (24) qui comprend une caméra (78) et un éclairage (80),
où dans une première étape d'ajustage d'outil (30) des coordonnées-profilé (102) sont allouées au contour-travail (28) du premier outil à usinage-profilés (10) enregistré dans la première étape de mesure d'outil (26), qui sont stockées dans une unité-mémoire (32) de l'appareil d'ajustage d'outil et de mesure d'outil (24),
où dans au moins une deuxième étape de mesure d'outil (34) un contour-travail (28), en particulier contour-fraisage ou contour-polissage, qui est au moins partiellement et/ou au moins par sections concave, d'un deuxième outil à usinage-profilés (12) du jeu d'outils à usinage-profilés (18) est détecté optiquement de façon semi-automatisée au moins par le biais du dispositif de mesure optique (76), où dans au moins une deuxième étape d'ajustage d'outil (36) les coordonnées de profilé (102) du deuxième outil à usinage-profilés (12) obtenues dans la deuxième étape de mesure d'outil (34) sont adaptées aux coordonnées de profilé (102) du premier outil à usinage-profilés (10) obtenues auparavant dans la première étape de mesure d'outil (26),
où dans la deuxième étape d'ajustage d'outil (36) les coordonnées de profilé (102) du contour-travail (28) du premier outil à usinage-profilés (10) sont entrées comme coordonnées de référence pour un positionnement relatif des coordonnées de profilé (102) du contour-travail enregistré (28) du deuxième outil à usinage-profilés (12) et sont stockées dans l'unité-mémoire (32) de l'appareil d'ajustage d'outil et de mesure d'outil (24), et
où les données de profilé sont conçues pour être sorties à une machine-outil (74) qui usine la plaque en pierre (22) successivement avec les outils à usinage (10, 12, 48, 50, 52, 54, 56), sur la base des données de profilé.

2. Procédé de mesure et d'ajustage selon la revendication 1,
**caractérisé par** au moins une pluralité d', en particulier au moins cinq, autres étapes de mesure d'outil (38, 40, 42, 44, 46),
dans lesquelles des contours-travail (28), en particulier des contours-fraisage ou contours-polissage, qui sont au moins partiellement et/ou au moins par sections concaves, d'une pluralité d'autres outils à usinage-profilés (48, 50, 52, 54, 56), en particulier d'au moins cinq autres outils à usinage-profilés (48, 50, 52, 54, 56), du jeu d'outils à usinage-profilés (18) sont détectés optiquement de façon au moins semi-automatisée,
où dans chacune des autres étapes de mesure d'outil (38, 40, 42, 44, 46) les coordonnées de profilé (102) des autres outils à usinage-profilés (48, 50, 52, 54, 56), obtenues dans l'étape de mesure d'outil respective, sont - respectivement dans au moins une autre étape d'ajustage d'outil allouée (58, 60, 62, 64, 66) - adaptées aux coordonnées de profilé (102), déterminées dans l'étape de mesure d'outil précédente (38, 40, 42, 44, 46), de l'un des autres outils à usinage-profilés (48, 50, 52, 54, 56) mesurées auparavant.

3. Procédé de mesure et d'ajustage selon l'une des revendications précédentes,
**caractérisé en ce que** dans la mesure et l'ajustage combinés de la pluralité d'outils à usinage-profilés individuels (10, 12, 48, 50, 52, 54, 56) du jeu d'outils à usinage-profilés (18), dans au moins une étape de mesure d'outil (40), un outil à fraisage-profilé (14), en particulier une roue à profiler, est mesurée optiquement, et dans au moins une étape de mesure d'outil (42) suivant l'étape de mesure d'outil (40) une roue polissage-profilé est mesurée optiquement.

4. Procédé de mesure et d'ajustage selon l'une des revendications précédentes,
**caractérisé en ce que** dans la mesure et l'ajustage combinés de la pluralité d'outils à usinage-profilés individuels (10, 12, 48, 50, 52, 54, 56) du jeu d'outils à usinage-profilés (18), dans au moins une étape de mesure d'outil (40), un outil à fraisage-profilé (14), en particulier une roue à profiler, est mesurée optiquement, et dans au moins une étape de mesure d'outil (42) suivant ladite étape de mesure d'outil (40) une roue polissage-profilé est mesurée optiquement,
et que dans une étape d'ajustage d'outil (62) suivant l'étape de mesure d'outil (42), dans laquelle la roue polissage-profilé était mesurée, et allouée à la roue polissage-profilé mesurée dans l'étape de mesure d'outil (42), les coordonnées de profilé obtenues (102) de la roue polissage-profilé sont adaptées aux coordonnées de profilé, obtenues dans la première étape de mesure d'outil (26), du premier outil à usinage-profilés (10) qui est réalisé comme outil à fraisage-profilé (14).

5. Procédé de mesure et d'ajustage selon l'une des revendications précédentes, où au moins une pluralité des outils à usinage-profilés (10, 12, 48, 50) du jeu d'outils à usinage-profilés (18), qui sont à mesurer, sont des roues à profiler, **caractérisé en ce que** dans la première étape de mesure d'outil (26) - exécutée sur une roue à profiler - de la mesure et de l'ajustage combinés de la pluralité d'outils à usinage-profilés individuels (10, 12, 48, 50) du jeu d'outils à usinage-profilés (18), la roue à profiler du jeu d'outils à usinage-profilés (18) est mesurée qui a la surface à usinage la moins rugueuse (84),
et que les roues à profiler, qui sont à mesurer dans les étapes de mesure d'outil suivants (34, 38, 40), sont assorties par ordre croissant selon une rugosité de la surface à usinage (84) des roues à profiler.

6. Procédé de mesure et d'ajustage selon l'une des revendications précédentes, où au moins une pluralité des outils à usinage-profilés (52, 54, 56) du jeu d'outils à usinage-profilés (18), qui sont à mesurer, sont des roues polissage-profilé, et où au moins une pluralité des outils à usinage-profilés (10, 12, 48, 50) du jeu d'outils à usinage-profilés (18), qui sont mesurer, sont des roues à profiler, **caractérisé en ce que** tout d'abord au moins une des roues à profiler du jeu d'outils à usinage-profilés (18) est mesurée et ajustée avant qu'une ou plusieurs roues polissage-profilé du jeu d'outils à usinage-profilés (18) soit/soient mesurée(s) et ajustée(s).

7. Procédé de mesure et d'ajustage selon l'une des revendications précédentes, où au moins une pluralité des outils à usinage-profilés (52, 54, 56) du jeu d'outils à usinage-profilés (18), qui sont à mesurer, sont des roues polissage-profilé, **caractérisé en ce que** les coordonnées de profilé (102) obtenues dans des étapes de mesure d'outil (42, 44, 46) pour roues polissage-profilé du jeu d'outils à usinage-profilés (18) sont respectivement adaptées aux coordonnées de profilé (102) obtenues des roues à profiler du jeu d'outils à usinage-profilés (18) qui ont la surface à usinage (84) la plus fine.

8. Procédé de mesure et d'ajustage selon l'une des revendications précédentes, **caractérisé en ce que** les coordonnées de profilé (102) stockées dans les étapes d'ajustage d'outil (30, 36, 58, 60, 62, 64, 66) sont superposées par les coordonnées d'un bord latéral (20) d'une plaque en pierre (22), qui est à être usiné.

9. Procédé de mesure et d'ajustage selon la revendication 8,
**caractérisé en ce que** dans les étapes d'ajustage d'outil (30, 36, 58, 60, 62, 64, 66), les coordonnées de profilé (102), obtenues dans les étapes de mesure d'outil (26, 34, 38, 40, 42, 44, 46), des outils à usinage-profilés individuels (10, 12, 48, 50, 52, 54, 56) du jeu d'outils à usinage-profilés (18) sont superposées de la façon la plus précise.

10. Procédé de mesure et d'ajustage selon la revendication 8,
**caractérisé en ce que** dans les étapes d'ajustage d'outil (30, 36, 58, 60, 62, 64, 66), les coordonnées de profilé (102), obtenues dans les étapes de mesure d'outil (26, 34, 38, 40, 42, 44, 46), des outils à usinage-profilés individuels (12, 48, 50, 52, 54, 56) du jeu d'outils à usinage-profilés (18) sont superposées par un offset (68).

11. Procédé de mesure et d'ajustage selon la revendication 10,
**caractérisé en ce que** l'offset (68) cause un déplacement des coordonnées de profilé (102) dans une direction parallèle à un plan d'étendue maximale (70) de la plaque en pierre (22) qui est à usiner.

12. Procédé de mesure et d'ajustage selon la revendication 10 ou 11,
**caractérisé en ce qu'**un offset (68) alloué à au moins l'un des outils à usinage-profilés (12, 48, 50) du jeu d'outils à usinage-profilés (18), réalisés comme roues à profiler, est réglé par rapport aux coordonnées de profilé obtenues (102) de la roue à profiler du jeu d'outils à usinage-profilés (18) mesurée auparavant.

13. Procédé de mesure et d'ajustage selon l'une des revendications 10 à 12,
**caractérisé en ce qu'**un offset (68) alloué à au moins l'un des outils à usinage-profilés (12, 48, 50) du jeu d'outils à usinage-profilés (18), réalisés comme roues à profiler, corresponde à une valeur idéale prédéterminée d'abrasion de matériau de ladite roue à profiler.

14. Procédé de mesure et d'ajustage selon l'une des revendications 10 'a 13,
**caractérisé en ce qu'**un offset (68) alloué à au moins un des outils à usinage-profilés (12, 48, 50, 52, 54, 56) du jeu d'outils à usinage-profilés (18) est réglé par rapport aux coordonnées de profilé obtenues (102) de la roue à profiler du jeu d'outils à usinage-profilés (18), mesurée auparavant, qui a la surface à usinage (84) la plus fine de toutes les roues à profiler du jeu d'outils à usinage-profilés (18).

15. Procédé de mesure et d'ajustage au moins selon les revendications 10 et 14,
**caractérisé en ce qu'**au moins un offset (68), alloué à une roue à profiler dans une étape d'ajustage d'outil (36, 58, 60), a une direction opposée à un offset (68) alloué à une roue polissage-profilé dans une autre étape d'ajustage d'outil (62, 64, 66).

16. Procédé de mesure et d'ajustage selon l'une des revendications précédentes,
**caractérisé en ce que** dans au moins une étape de sortie (72) les coordonnées de profilé (102) obtenues et mutuellement adaptées sont transmises à une machine-outil (74) en forme lisible par machine.

17. Procédé de mesure et d'ajustage au moins selon les revendications 10 et 16,
**caractérisé en ce qu'**un offset (68), alloué à au moins une des roues à profiler du jeu d'outils à usinage-profilés (18), cause la transmission à la machine-outil (74) d'un jeu de données avec un outil à fraisage-profilé virtuellement élargi.

18. Procédé de mesure et d'ajustage au moins selon les revendications 14 et 16,
**caractérisé en ce qu'**un offset (68), alloué à au moins l'une des roues polissage-profilé du jeu d'outils à usinage-profilés (18) cause la transmission à la machine-outil (74) d'un jeu de données avec un outil à polissage-profilé virtuellement diminué.

19. Procédé de mesure et d'ajustage selon la revendication 8,
**caractérisé en ce qu'**au moins les coordonnées de profilé (102) stockées dans la première étape d'ajustage d'outil (30) sont automatiquement alignées par rapport à la plaque en pierre (22) qui est à être usinée.

20. Procédé de mesure et d'ajustage selon la revendication 19,
**caractérisé en ce que** pour l'alignement des coordonnées de profilé (102) par rapport à la plaque en pierre (22), un point du contour-travail (28) de l'outil à usinage-profilé (10) mesuré dans la première étape de mesure d'outil (26) est déterminé dans lequel le contour-travail (28) prend un radius de courbature maximal.

21. Procédé de mesure et d'ajustage selon l'une des revendications précédentes,
**caractérisé en ce que** les contours-travail (28) des outils à usinage-profilés (10, 12, 48, 50, 52, 54, 56), en particulier du premier outil à usinage-profilés (10) et du deuxième outil à usinage-profilés (12), du jeu d'outils à usinage-profilés (18) copient une forme de bord désirée (86) de la plaque en pierre (22) à être usinée.

22. Appareil d'ajustage d'outil et de mesure d'outil optique (24),
adapté pour exécuter le procédé de mesure et d'ajustage optique selon l'une des revendications 1 à 21,
comprenant un dispositif de mesure optique (76) avec une caméra (78) et un éclairage (80).
